(19) Europäisches Patentamt
European Patent Office
Office européen des brevets

(11) EP 4 412 362 A1

(12) EUROPEAN PATENT APPLICATION
published in accordance with Art. 153(4) EPC

(43) Date of publication:
07.08.2024 Bulletin 2024/32

(51) International Patent Classification (IPC):
H04W 72/04 (2023.01)

(21) Application number: 22882660.8

(52) Cooperative Patent Classification (CPC):
H04W 72/04; H04W 72/0446; H04W 72/53;
H04W 72/541

(22) Date of filing: 09.10.2022

(86) International application number:
PCT/CN2022/124142

(87) International publication number:
WO 2023/066050 (27.04.2023 Gazette 2023/17)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.10.2021 CN 202111236094

(71) Applicant: Huawei Technologies Co., Ltd.
Shenzhen, Guangdong 518129 (CN)

(72) Inventors:
• HOU, Hailong
  Shenzhen, Guangdong 518129 (CN)
• ZHANG, Zhanzhan
  Shenzhen, Guangdong 518129 (CN)
• JIN, Zhe
  Shenzhen, Guangdong 518129 (CN)
• YU, Zheng
  Shenzhen, Guangdong 518129 (CN)
• WANG, Yi
  Shenzhen, Guangdong 518129 (CN)
• WEN, Ronghui
  Shenzhen, Guangdong 518129 (CN)

(74) Representative: Grünecker Patent- und
Rechtsanwälte
PartG mbB
Leopoldstraße 4
80802 München (DE)

(54) METHOD FOR SENDING PHYSICAL UPLINK CONTROL CHANNEL, METHOD FOR RECEIVING PHYSICAL UPLINK CONTROL CHANNEL, AND COMMUNICATION APPARATUS

(57) This application discloses a PUCCH sending method and receiving method, and a communication apparatus. The method includes: A terminal device determines a first base sequence and a second base sequence, sends a first part of a PUCCH on a first time domain resource based on the first base sequence, and sends a second part of the PUCCH on a second time domain resource based on the second base sequence. The terminal device sends the PUCCH in a disabled frequency hopping transmission mode in a first time unit, and the PUCCH occupies L consecutive symbols. The first time domain resource is F consecutive symbols in the L symbols, the second time domain resource is (L-F) consecutive symbols in the L symbols, and both L and F are positive integers. When different terminal devices communicate on a same time-frequency resource separately in an intra-time unit frequency hopping transmission mode and a disabled intra-time unit frequency hopping transmission mode, signal interference between the different terminal devices can be avoided according to the method in this application, thereby improving communication quality.

FIG. 4

**Description**

**CROSS-REFERENCE TO RELATED APPLICATIONS**

This application claims priority to Chinese Patent Application No. 202111236094.9, filed with the China National Intellectual Property Administration on October 22, 2021 and entitled "PHYSICAL UPLINK CONTROL CHANNEL SENDING METHOD AND RECEIVING METHOD, AND COMMUNICATION APPARATUS", which is incorporated herein by reference in its entirety.

**TECHNICAL FIELD**

This application relates to the field of random access technologies, and in particular, to a physical uplink control channel (physical uplink control channel, PUCCH) sending method and receiving method, and a communication apparatus.

**BACKGROUND**

In a new radio (new radio, NR) system, intra-slot frequency hopping (intra-slot frequency hopping) transmission of a PUCCH is supported, in other words, an $i^{th}$ hop and an $(i+1)^{th}$ hop of the PUCCH are sent in a slot by using different base sequences. To improve resource utilization, different terminal devices may multiplex a same resource (such as a resource block). For example, a legacy (legacy) terminal device (such as an enhanced mobile broadband (enhanced mobile broadband, eMBB) device) and a low-complexity terminal device (such as a massive machine-type communications (massive machine-type communications, mMTC) device) may transmit PUCCH channels on the same resource.

Therefore, for a scenario in which the legacy terminal device and the low-complexity terminal device coexist, when the low-complexity terminal device performs transmission in a disabled intra-slot frequency hopping mode, the PUCCH is sent in the slot based only on one base sequence. However, on the same time-frequency resource, if the legacy terminal device performs transmission in an intra-slot frequency hopping mode, the $i^{th}$ hop and the $(i+1)^{th}$ hop of the PUCCH are sent based on different base sequences. In this case, the base sequence based on which the legacy terminal device sends the $(i+1)^{th}$ hop of the PUCCH is different from the base sequence based on which the low-complexity terminal device sends the PUCCH. Consequently, there may be a scenario in which the PUCCHs sent by the low-complexity terminal device and the legacy terminal device are not orthogonal. As a result, signal interference is caused, and communication quality and performance deteriorate.

Therefore, a PUCCH transmission method is urgently needed, to improve transmission quality performance when a plurality of terminal devices multiplex a transmission resource.

**SUMMARY**

This application provides a PUCCH sending method and receiving method, and a communication apparatus, to improve transmission quality performance when a plurality of terminal devices multiplex a transmission resource.

According to a first aspect, a PUCCH sending method is provided. The method may be performed by a first communication apparatus. The first communication apparatus may be a communication device or a communication apparatus, for example, a chip system, that can support the communication device in implementing functions required in the method. The following uses an example in which the communication device is a terminal device for description. The method includes the following steps.

The terminal device determines a first base sequence and a second base sequence, sends a first part of a PUCCH on a first time domain resource based on the first base sequence, and sends a second part of the PUCCH on a second time domain resource based on the second base sequence. The terminal device sends the PUCCH in a disabled intra-time unit frequency hopping transmission mode, and the PUCCH occupies L consecutive symbols. The first time domain resource is F consecutive symbols in the L symbols, the second time domain resource is (L-F) consecutive symbols in the L symbols, and both L and F are positive integers.

Correspondingly, according to a second aspect, a PUCCH receiving method is provided. The method may be performed by a second communication apparatus. The second communication apparatus may be a communication device or a communication apparatus, for example, a chip system, that can support the communication device in implementing a function required in the method. The following uses an example in which the communication device is a network device for description. The method includes the following steps.

The network device determines a first base sequence and a second base sequence, receives a first part of a PUCCH on a first time domain resource based on the first base sequence, and receives a second part of the PUCCH on a second time domain resource based on the second base sequence. The PUCCH is sent in a disabled intra-time unit frequency hopping transmission mode, and the PUCCH occupies L consecutive symbols. The first time domain resource is F consecutive symbols in the L symbols, the second time domain resource is (L-F) consecutive symbols in the L symbols, and both L and F are positive integers.

In embodiments of this application, because the terminal device sends the PUCCH in the disabled frequency hopping transmission mode in a time unit based on two different base sequences, the second base sequence used by the terminal device to send the second part of the PUCCH may be the same as the base sequence that is for sending a second hop of a PUCCH that is transmitted through intra-time unit frequency hopping. In this way, even if a first terminal device sends PUCCH 1 in an intra-time unit frequency hopping transmission mode and a second terminal device sends PUCCH 2 through disabled intra-time unit frequency hopping transmission on a same time-frequency resource, because the second base sequence used by the second terminal device to send a second part of PUCCH 2 may be the same as the base sequence used by the first terminal device to send a second hop of PUCCH 1, it can be ensured that PUCCH 1 and PUCCH 2 are orthogonal on the time-frequency resource, so as to avoid interference caused when the first terminal device and the second terminal device send the PUCCHs, thereby reducing deterioration of PUCCH transmission performance of the terminal devices as much as possible.

In a possible implementation of the first aspect or the second aspect, elements of the first base sequence are mapped, one by one, to resource elements (resources elements, REs) included in a frequency resource of each symbol that is in the first time domain resource. Elements of the second base sequence are mapped, one by one, to resource elements REs included in a frequency resource of each symbol that is in the second time domain resource.

In a possible implementation of the first aspect or the second aspect, a value of $n_{hop}$ corresponding to the first base sequence is 0, a value of $n_{hop}$ corresponding to the second base sequence is 1, and $n_{hop}$ is for determining a base sequence group in which a base sequence is located and a sequence number of the base sequence in the base sequence group. It may be understood that this solution provides a manner of determining the first base sequence and the second base sequence, in other words, a manner of determining base sequences corresponding to two hops of the PUCCH in a solution in which the PUCCH is transmitted through intra-time unit frequency hopping is reused.

In a possible implementation of the first aspect or the second aspect, the first time domain resource corresponds to a first hop of a PUCCH that is transmitted through intra-time unit frequency hopping, and the second time domain resource corresponds to a second hop of the PUCCH corresponding to intra-time unit frequency hopping. In other words, a manner of determining time domain resource positions of an ith hop and an (i+1)th hop of the PUCCH that is transmitted through intra-slot frequency hopping is reused, to determine the first time domain resource and the second time domain resource. Particularly, this solution is applicable to a scenario in which a center of a time domain resource occupied by a PUCCH that is transmitted through disabled intra-slot frequency hopping is the same as a center of a time domain resource occupied by a PUCCH that is transmitted through intra-slot frequency hopping. The network device does not need to additionally indicate the first time domain resource and the second time domain resource, so that signaling overheads can be reduced.

In a possible implementation, the method further includes: The terminal device receives first indication information. Correspondingly, the network device sends the first indication information, where the first indication information indicates the first time domain resource and/or the second time domain resource. That is, the network device indicates, via signaling the first time domain resource and/or the second time domain resource. Even if the center of the time domain resource occupied by the PUCCH that is transmitted through disabled intra-slot frequency hopping is different from the center of the time domain resource occupied by the PUCCH that is transmitted through intra-slot frequency hopping, this solution can avoid a case in which the first time domain resource and the second time domain resource correspond to more than one base sequence on some symbols, and consequently, PUCCHs transmitted on these symbols are not orthogonal.

In a possible implementation, the PUCCH carries a hybrid automatic repeat request-acknowledgment (hybrid automatic repeat request-acknowledgment, HARQ-ACK) feedback of a random access message B or a random access message 4. In embodiments of this application, a PUCCH resource may be a resource used to send the HARQ-ACK feedback of the random access message B or the random access message 4, that is, a common PUCCH resource. To be specific, the terminal device may send the PUCCH on the common PUCCH resource in the disabled intra-time unit frequency hopping transmission mode, so that fragmentation of the PUCCH resource is reduced when the legacy terminal device and the low-complexity terminal device multiplex the common PUCCH resource.

In a possible implementation, the PUCCH includes uplink control information (uplink control information, UCI) of the PUCCH and a demodulation reference signal (demodulation reference signal, DMRS) of the PUCCH.

In a possible implementation, the method further includes: The terminal device receives third indication information. Correspondingly, the network device sends the third indication information, where the third indication information indicates to send the PUCCH in the disabled intra-time unit frequency hopping mode. For example, even on the common PUCCH resource, the network device may indicate, via signaling, the terminal device to send the PUCCH in the disabled intra-time unit frequency hopping mode. In this way, when the legacy terminal device and the low-complexity terminal device multiplex the common PUCCH resource, the low-complexity terminal device may be indicated to send the PUCCH in the disabled intra-time unit frequency hopping mode, thereby reducing fragmentation of the PUCCH resource.

In the solution provided in the first aspect, a plurality of terminal devices are allowed to multiplex a same time-frequency resource to send PUCCHs in an intra-slot frequency hopping transmission mode and a disabled intra-slot frequency hopping transmission mode. When the plurality of terminal devices include, for example, a legacy terminal device and a low-complexity terminal device, uplink resource fragmentation that may be caused by introducing the low-complexity terminal device to send the PUCCH can be reduced as much as possible. In addition, because the terminal device may send the PUCCH in the disabled frequency hopping transmission mode in a slot based on two different base sequences, the second base sequence used by the terminal device to send the second part of the PUCCH may be the same as the base sequence that is for sending the second hop of the PUCCH that is transmitted through intra-time unit frequency hopping. Therefore, it can be ensured that PUCCHs sent by a plurality of terminal devices on a same time-frequency resource are orthogonal, and mutual interference between the PUCCHs sent by the plurality of terminal devices can be avoided.

According to a third aspect, a PUCCH sending method is provided. The method may be performed by a first communication apparatus. The first communication apparatus may be a communication device or a communication apparatus, for example, a chip system, that can support the communication device in implementing a function required in the method. The following uses an example in which the communication device is a terminal device for description. The method includes the following steps.

The terminal device determines a physical resource block (physical resource block, PRB) position of a resource corresponding to a PUCCH, and sends the PUCCH based on the determined PRB position. The PRB position of the resource corresponding to the PUCCH satisfies $RB_{\mathrm{BWP}}^{\mathrm{offset}} + \left\lfloor r_{\mathrm{PUCCH}} / N_{\mathrm{CS}} \right\rfloor$ or $N_{\mathrm{BWP}}^{\mathrm{size}} - 1 - RB_{\mathrm{BWP}}^{\mathrm{offset}} - \left\lfloor \left( r_{\mathrm{PUCCH}} - 8 \right) / N_{\mathrm{CS}} \right\rfloor$. It may be understood that $r_{PUCCH}$ is a PUCCH resource index, $N_{CS}$ is a quantity of cyclic shifts of a common PUCCH resource set, $RB_{BWP}^{offset}$ is a frequency domain offset value of the common PUCCH resource set, and $N_{BWP}^{Size}$ is a size of a bandwidth part (bandwidth part, BWP) configured with a PUCCH resource.

Correspondingly, according to a fourth aspect, a PUCCH receiving method is provided. The method may be performed by a second communication apparatus. The second communication apparatus may be a communication device or a communication apparatus, for example, a chip system, that can support the communication device in implementing a function required in the method. The following uses an example in which the communication device is a network device for description. The method includes:

The network device determines a physical resource block (physical resource block, PRB) position of a resource corresponding to a PUCCH, and receives the PUCCH based on the determined PRB position. The PRB position of the resource corresponding to the PUCCH satisfies $RB_{\mathrm{BWP}}^{\mathrm{offset}} + \left\lfloor r_{\mathrm{PUCCH}} / N_{\mathrm{CS}} \right\rfloor$ or $N_{\mathrm{BWP}}^{\mathrm{size}} - 1 - RB_{\mathrm{BWP}}^{\mathrm{offset}} - \left\lfloor \left( r_{\mathrm{PUCCH}} - 8 \right) / N_{\mathrm{CS}} \right\rfloor$. It may be understood that $r_{PUCCH}$ is a PUCCH resource index, $N_{CS}$ is a quantity of cyclic shifts of a common PUCCH resource set, $RB_{BWP}^{offset}$ is a frequency domain offset value of the common PUCCH resource set, and $N_{BWP}^{Size}$ is a size of a bandwidth part (bandwidth part, BWP) configured with a PUCCH resource.

In embodiments of this application, two manners of determining the physical resource block (physical resource block, PRB) position of the resource corresponding to the PUCCH are provided, that is, determining based on $RB_{\mathrm{BWP}}^{\mathrm{offset}} + \left\lfloor r_{\mathrm{PUCCH}} / N_{\mathrm{CS}} \right\rfloor$ and determining based on $N_{\mathrm{BWP}}^{\mathrm{size}} - 1 - RB_{\mathrm{BWP}}^{\mathrm{offset}} - \left\lfloor \left( r_{\mathrm{PUCCH}} - 8 \right) / N_{\mathrm{CS}} \right\rfloor$. The terminal device may send the PUCCH in one of the two determining manners, so that a frequency domain resource corresponding to the PUCCH is calculated starting from a lowest frequency position or a highest frequency position of a carrier bandwidth as much as possible, that is, to reduce uplink resource fragmentation of the PUCCH as much as possible, and improve an uplink transmission rate.

In a possible implementation, a specific determining manner used by the terminal device may be indicated by the network device via signaling. For example, the network device may send second indication information. Correspondingly, the terminal device receives the second indication information, where the second indication information indicates the PRB position of the resource corresponding to the PUCCH.

In a possible implementation, the terminal device and the network device may alternatively determine, based on a position of the BWP configured with the PUCCH resource, the PRB position of the resource corresponding to the PUCCH. For example, if center frequency of the BWP configured with the PUCCH is lower than center frequency of a carrier bandwidth, the PRB position of the resource corresponding to the PUCCH is determined based on

$$RB_{\text{BWP}}^{\text{offset}} + \left\lfloor r_{\text{PUCCH}} / N_{\text{CS}} \right\rfloor$$ . If center frequency of the BWP configured with the PUCCH is higher than center frequency of a carrier bandwidth, the PRB position of the resource corresponding to the PUCCH is determined based on

$$N_{\text{BWP}}^{\text{size}} - 1 - RB_{\text{BWP}}^{\text{offset}} - \left\lfloor (r_{\text{PUCCH}} - 8) / N_{\text{CS}} \right\rfloor$$ . The PRB position of the resource corresponding to the PUCCH can also be determined without an indication of the network device, thereby reducing signaling overheads.

It should be noted that the method provided in the first aspect and the method provided in the third aspect may be combined. For example, the terminal device determines the first base sequence and the second base sequence according to the method provided in the first aspect, and determines, according to the method provided in the third aspect, the PRB position of the resource corresponding to the PUCCH, so as to send the PUCCH on the determined resource based on the first base sequence and the second base sequence. Correspondingly, the method provided in the second aspect may also be combined with the method provided in the fourth aspect.

According to a fifth aspect, a PUCCH sending method is provided. The method may be performed by a first communication apparatus. The first communication apparatus may be a communication device or a communication apparatus, for example, a chip system, that can support the communication device in implementing a function required in the method. The following uses an example in which the communication device is a terminal device for description. The method includes:

The terminal device determines a first base sequence, and sends a first PUCCH on a first time domain resource based on the first base sequence. The first PUCCH occupies L2 consecutive symbols, and is sent in a disabled intra-time unit frequency hopping transmission mode. The L2 symbols are located in L1 symbols occupied by an ith hop of a second PUCCH, and the second PUCCH is sent in an intra-time unit frequency hopping transmission mode. In this case, the first base sequence is the same as a base sequence that is for sending the ith hop of the second PUCCH.

Correspondingly, according to a sixth aspect, a PUCCH receiving method is provided. The method may be performed by a second communication apparatus. The second communication apparatus may be a communication device or a communication apparatus, for example, a chip system, that can support the communication device in implementing a function required in the method. The following uses an example in which the communication device is a network device for description. The method includes:

The network device determines a first base sequence, and receives a first PUCCH on a first time domain resource based on the first base sequence, where the first PUCCH occupies L2 consecutive symbols and is sent in a disabled intra-time unit frequency hopping transmission mode. The L2 symbols are located in L1 symbols occupied by an ith hop of a second PUCCH, and the second PUCCH is sent in an intra-time unit frequency hopping transmission mode. In this case, the first base sequence is the same as a base sequence that is for sending the ith hop of the second PUCCH.

Particularly, different terminal devices separately send PUCCHs in the intra-time unit frequency hopping transmission mode and in the disabled intra-time unit frequency hopping transmission mode. If a time domain resource occupied by the PUCCH sent in the disabled intra-time unit frequency hopping transmission mode is located on a time domain resource occupied by an ith hop of the PUCCH sent in the intra-time unit frequency hopping transmission mode, it may be specified that a base sequence based on which the PUCCH is sent in the disabled intra-time unit frequency hopping transmission mode and a base sequence based on which the ith hop of the PUCCH is sent in the intra-time unit frequency hopping transmission mode are the same. This can also ensure that the PUCCHs sent on the time-frequency resource are orthogonal.

According to a seventh aspect, a random PUCCH sending method is provided. The method may be performed by a first communication apparatus. The first communication apparatus may be a communication device or a communication apparatus, for example, a chip system, that can support the communication device in implementing a function required in the method. The following uses an example in which the communication device is a terminal device for description. The method includes:

The terminal device determines a first random access channel occasion (random access channel occasion, RO) associated with a first synchronization signal and physical broadcast channel block (synchronization signal and physical broadcast channel (PBCH) block, SSB), and sends a random PUCCH (preamble) to a network device based on the first RO and a first uplink BWP. The first SSB is associated with N ROs, the N ROs include Q RO sets, the Q RO sets are in one-to-one correspondence with Q uplink BWPs configured by the terminal device, the first uplink BWP is an uplink BWP corresponding to the first RO, the first RO belongs to the N ROs, Q is a positive integer greater than 1, and N is a positive integer greater than 1.

Correspondingly, according to an eighth aspect, a random PUCCH receiving method is provided. The method may be performed by a second communication apparatus. The second communication apparatus may be a communication device or a communication apparatus, for example, a chip system, that can support the communication device in implementing a function required in the method. The following uses an example in which the communication device is a network device for description. The method includes:

The network device configures Q uplink BWPs for a terminal device, where the Q uplink BWPs correspond to N ROs, the N ROs include Q RO sets, the Q RO sets are in one-to-one correspondence with the Q uplink BWPs, and the N ROs are mapped to (or associated with) a plurality of SSBs.

The network device receives a preamble from the terminal device.

In a possible implementation, the plurality of SSBs are mapped to the N ROs in the following order:

first, mapping in an ascending order of preamble indexes in an RO;
second, mapping in an ascending order of frequency resource indexes of frequency-multiplexed one or more ROs (ROs);
third, mapping in an ascending (or descending) order of indexes of the uplink BWPs, or in an order of the uplink BWPs indicated by the network device;
fourth, mapping in an ascending order of time domain resource indexes of time-division multiplexed ROs in a PRACH slot; and
finally, mapping in an ascending order of PRACH slot indexes.

In a possible implementation, ROs on the Q uplink BWPs may be jointly numbered or independently numbered.

In a possible implementation, an RO configured on each of the Q uplink BWPs is an RO dedicated to a second-type terminal device, or an RO configured on each of the Q uplink BWPs is an RO multiplexed by a first-type terminal device and the second-type terminal device.

In a possible implementation, the network device does not configure an NCD-SSB, and an SSB associated with the RO is a CD-SSB; or the network device configures an NCD-SSB, and an SSB associated with the RO is a CD-SSB or the NCD-SSB.

In a possible implementation, the Q uplink BWPs include a first uplink BWP and a second uplink BWP, and frequency domain positions of the plurality of SSBs are located in a first downlink BWP corresponding to the first uplink BWP, or located in a second downlink BWP corresponding to the second uplink BWP, or located outside the first downlink BWP corresponding to the first uplink BWP and the second downlink BWP corresponding to the second uplink BWP. In other words, corresponding SSBs may not be separately configured for downlink BWPs corresponding to the Q uplink BWPs. For example, an SSB is configured for the first downlink BWP, and no SSB is configured for the second downlink BWP. The second downlink BWP may reuse the SSB corresponding to the first downlink BWP, or reuse another SSB, thereby reducing resource overheads of SSBs.

According to a ninth aspect, an embodiment of this application provides a communication apparatus. The communication apparatus has a function of implementing behavior in the method instance in the first aspect (the third aspect, the fifth aspect, or the seventh aspect). For beneficial effects, refer to the descriptions of the first aspect (the third aspect, the fifth aspect, or the seventh aspect). Details are not described herein again. The communication apparatus may be the terminal device in the first aspect (the third aspect, the fifth aspect, or the seventh aspect), or the communication apparatus may be an apparatus, for example, a chip or a chip system, that can support the terminal device in the first aspect (the third aspect, the fifth aspect, or the seventh aspect) in implementing a function required by the method provided in the first aspect (the third aspect, the fifth aspect, or the seventh aspect). In a possible design, the communication apparatus includes a corresponding means (means) or module configured to perform the method in the first aspect (the third aspect, the fifth aspect, or the seventh aspect). For example, the communication apparatus includes a processing unit (sometimes also referred to as a processing module or a processor) and/or a transceiver unit (sometimes also referred to as a transceiver module or a transceiver). These units (modules) may perform corresponding functions in the method example in the first aspect (the third aspect, the fifth aspect, or the seventh aspect). For details, refer to detailed descriptions in the method examples. Details are not described herein again.

According to a tenth aspect, an embodiment of this application provides a communication apparatus. The communication apparatus has a function of implementing behavior in the method instance in the second aspect (the fourth aspect, the sixth aspect, or the eighth aspect). For beneficial effects, refer to descriptions of the second aspect (the fourth aspect, the sixth aspect, or the eighth aspect). Details are not described herein again. The communication apparatus may be the network device in the second aspect (the fourth aspect, the sixth aspect, or the eighth aspect), or the communication apparatus may be an apparatus, for example, a chip or a chip system, that can support the network device in the second aspect (the fourth aspect, the sixth aspect, or the eighth aspect) in implementing a function required by the method provided in the second aspect (the fourth aspect, the sixth aspect, or the eighth aspect). In a possible design, the communication apparatus includes a corresponding means (means) or module configured to perform the method in the second aspect (the fourth aspect, the sixth aspect, or the eighth aspect). For example, the communication apparatus includes a processing unit (sometimes also referred to as a processing module or a processor) and/or a transceiver unit (sometimes also referred to as a transceiver module or a transceiver). These units (modules) may perform corresponding functions in the method example in the second aspect (the fourth aspect, the sixth aspect, or the eighth aspect). For details, refer to detailed descriptions in the method examples. Details are not described herein again.

According to an eleventh aspect, an embodiment of this application provides a communication apparatus. The communication apparatus may be the communication apparatus in the ninth aspect or the tenth aspect in the foregoing embodiments, or may be a chip or a chip system disposed in the communication apparatus in the ninth aspect or the tenth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the methods performed by the terminal device in the foregoing method embodiments, or perform the methods performed by the network device in the foregoing method embodiments.

According to a twelfth aspect, an embodiment of this application provides a communication apparatus. The communication apparatus includes an input/output interface and a logic circuit. The input/output interface is configured to input and/or output information. The logic circuit is configured to perform the method according to any one of the first aspect to the eighth aspect.

According to a thirteenth aspect, an embodiment of this application provides a chip system. The chip system includes a processor, and may further include a memory and/or a communication interface, configured to implement the method according to any one of the first aspect to the eighth aspect. In a possible implementation, the chip system further includes a memory, configured to store a computer program. The chip system may include a chip, or may include a chip and another discrete component.

According to a fourteenth aspect, an embodiment of this application provides a communication system. The communication system includes the communication apparatus in the ninth aspect configured to implement the method in the first aspect and the communication apparatus in the tenth aspect configured to implement the method in the second aspect. Alternatively, the communication system includes the communication apparatus in the ninth aspect configured to implement the method in the third aspect and the communication apparatus in the tenth aspect configured to implement the method in the fourth aspect. Alternatively, the communication system includes the communication apparatus in the ninth aspect configured to implement the method in the fifth aspect and the communication apparatus in the tenth aspect configured to implement the method in the sixth aspect. Alternatively, the communication system includes the communication apparatus in the ninth aspect configured to implement the method in the seventh aspect and the communication apparatus in the tenth aspect configured to implement the method in the eighth aspect.

According to a fifteenth aspect, this application provides a computer-readable storage medium. The computer-readable storage medium stores a computer program. When the computer program is run, the method in any one of the first aspect to the eighth aspect is implemented.

According to a sixteenth aspect, a computer program product is provided. The computer program product includes computer program code. When the computer program code is run, the method in any one of the first aspect to the eighth aspect is performed.

For beneficial effects of the ninth aspect to the sixteenth aspect and the implementation of the ninth aspect to the sixteenth aspect, refer to descriptions of beneficial effects of the first aspect to the eighth aspect, or the first aspect to the eighth aspect and the implementations of the first aspect to the eighth aspect.

## BRIEF DESCRIPTION OF DRAWINGS

FIG. 1 is a schematic diagram of a network architecture to which an embodiment of this application is applicable;
FIG. 2 is a schematic diagram of frequency hopping transmission of a PUCCH in a slot X;
FIG. 3 is a schematic diagram of disabled frequency hopping transmission of a PUCCH in a slot X;
FIG. 4 is a schematic flowchart of a PUCCH sending method and receiving method according to an embodiment of this application;
FIG. 5 is a first schematic diagram in which UE 1 and UE 2 respectively send a PUCCH in an intra-slot frequency hopping transmission mode and send a PUCCH in a disabled intra-slot frequency hopping transmission mode according to an embodiment of this application;

FIG. 6 is a second schematic diagram in which UE 1 and UE 2 respectively send a PUCCH in an intra-slot frequency hopping transmission mode and send a PUCCH in a disabled intra-slot frequency hopping transmission mode according to an embodiment of this application;

FIG. 7 is a third schematic diagram in which UE 1 and UE 2 respectively send a PUCCH in an intra-slot frequency hopping transmission mode and send a PUCCH in a disabled intra-slot frequency hopping transmission mode according to an embodiment of this application;

FIG. 8 is a fourth schematic diagram in which UE 1 and UE 2 respectively send a PUCCH in an intra-slot frequency hopping transmission mode and send a PUCCH in a disabled intra-slot frequency hopping transmission mode according to an embodiment of this application;

FIG. 9 is a fifth schematic diagram in which UE 1 and UE 2 respectively send a PUCCH in an intra-slot frequency hopping transmission mode and send a PUCCH in a disabled intra-slot frequency hopping transmission mode according to an embodiment of this application;

FIG. 10 is a schematic diagram of dividing PUCCH resources into resource sets of different types of terminal devices according to an embodiment of this application;

FIG. 11 is a schematic diagram of a location relationship between a frequency domain resource corresponding to a PUCCH and a carrier bandwidth according to an embodiment of this application;

FIG. 12 is another schematic diagram of a location relationship between a frequency domain resource corresponding to a PUCCH and a carrier bandwidth according to an embodiment of this application;

FIG. 13 is a first schematic diagram of an association relationship between ROs and SSBs on two BWPs according to an embodiment of this application;

FIG. 14 is a second schematic diagram of an association relationship between ROs and SSBs on two BWPs according to an embodiment of this application;

FIG. 15 is a third schematic diagram of an association relationship between ROs and SSBs on two BWPs according to an embodiment of this application;

FIG. 16 is a fourth schematic diagram of an association relationship between ROs and SSBs on two BWPs according to an embodiment of this application;

FIG. 17 is a fifth schematic diagram of an association relationship between ROs and SSBs on two BWPs according to an embodiment of this application;

FIG. 18 is a sixth schematic diagram of an association relationship between ROs and SSBs on two BWPs according to an embodiment of this application;

FIG. 19 is a schematic diagram of a structure of a communication apparatus according to an embodiment of this application;

FIG. 20 is another schematic diagram of a structure of a communication apparatus according to an embodiment of this application;

FIG. 21 is an example schematic diagram of a structure of a communication apparatus according to an embodiment of this application; and

FIG. 22 is an example schematic diagram of a structure of another communication apparatus according to an embodiment of this application.

## DESCRIPTION OF EMBODIMENTS

To make objectives, technical solution, and advantages of embodiments of this application clearer, the following further describes embodiments of this application in detail with reference to the accompanying drawings.

The technical solutions provided in embodiments of this application may be applied to a fifth generation (the fifth generation, 5G) mobile communication system, for example, an NR system, or may be applied to a long term evolution (long term evolution, LTE) system, or may be applied to a next generation mobile communication system or another similar communication system. This is not specifically limited.

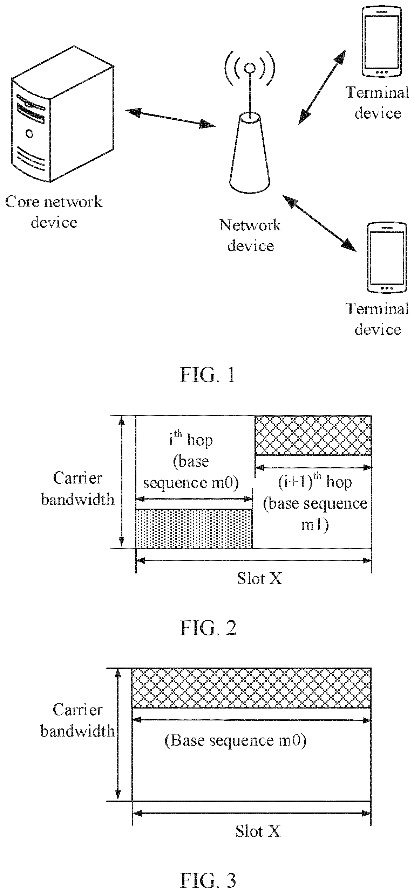

FIG. 1 is an example diagram of an architecture of a communication system to which an embodiment of this application is applicable. The communication system may include a core network device, a network device, and at least one terminal device. As shown in FIG. 1, an example in which the at least one terminal device is two terminal devices is used. The terminal device is connected to the network device in a wireless manner, and the network device is connected to the core network device in a wireless or wired manner. The core network device and the network device may be different independent physical devices; or a function of the core network device and a logical function of the network device are integrated into a same physical device; or some functions of the core network device and some functions of the network device are integrated into a same physical device. It should be noted that FIG. 1 is merely an example. A quantity of core network devices, a quantity of network devices, and a quantity of terminal devices included in the mobile communication system are not limited in embodiments of this application. In some embodiments, the communication system may further include another network device such as a wireless relay device or a wireless backhaul device.

The network device is an access device to which the terminal device accesses in the mobile communication system in a wireless manner, for example, includes an access network (access network, AN) device such as a base station (such as an access point). Alternatively, the network device may be a device that communicates with the terminal device over an air interface, for example, another possible terminal device apparatus. For another example, the network device is a roadside unit (roadside unit, RSU) in a V2X technology. The base station may be configured to: perform mutual conversion between a received over-the-air frame and a received internet protocol (internet protocol, IP) packet, and serve as a router between the terminal device and a remaining part of an access network, where the remaining part of the access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (NodeB, eNB, or e-NodeB, evolved NodeB) in a long term evolution (long term evolution, LTE) system or a long term evolution-advanced (long term evolution-advanced, LTE-A) system; or may include a next generation NodeB (next generation NodeB, gNB) in a 5GNR system; or may include a central unit (central unit, CU) and a distributed unit (distributed unit, DU) in a cloud access network (cloud radio access network, Cloud RAN) system; or may include an access node in a wireless-fidelity (wireless-fidelity, Wi-Fi) system. A specific technology and a specific device form that are used by the wireless network device are not limited in embodiments of this application.

In embodiments of this application, the terminal device may be user equipment (user equipment, UE), an access terminal device, a subscriber unit, a subscriber station, a mobile station, a remote station, a remote terminal device, a mobile device, a user terminal device, a wireless communication device, a user agent, or a user apparatus. The terminal device in embodiments of this application may be a mobile phone (mobile phone), a tablet computer (Pad), a computer with a wireless transceiver function, a virtual reality (virtual reality, VR) terminal device, an augmented reality (augmented reality, AR) terminal device, a wireless terminal device in industrial control (industrial control), a wireless terminal device in self driving (self driving), or the like. The network device may be the next generation base station (next Generation NodeB, gNB) in the NR system, the evolved NodeB (evolved NodeB, eNB) in the LTE system, or the like.

The terminal device may be classified into a plurality of types of terminal devices based on types of services supported by the terminal devices. For example, reduced capability (reduced capability, REDCAP) UE, namely, a low-complexity or low-capability terminal device, may have less complexity than another terminal device in terms of a bandwidth, power consumption, and an antenna quantity, for example, may have a narrower bandwidth, lower power consumption, and a smaller antenna quantity. This type of terminal device may also be referred to as an (NR light, NRL) terminal device, namely, a lightweight terminal device. Relatively, a non-low-complexity or non-reduced-capability terminal device (such as an eMBB terminal device) may be referred to as a normal terminal device or a legacy terminal device in embodiments of this application. Alternatively, it may be considered that there are two types of terminal devices in embodiments of this application. For example, a first-type terminal device may be a terminal device other than the low-complexity terminal device. A second-type terminal device is the low-complexity terminal device.

The terminal device in embodiments of this application may be the first-type terminal device, the second-type terminal device, or another terminal device that needs to perform transmission performance enhancement. A difference between the first-type terminal device and the second-type terminal device includes at least one of the following items.

1. Bandwidth capabilities are different. A maximum bandwidth supported by the first-type terminal device may be greater than a maximum bandwidth supported by the second-type terminal device. For example, the first-type terminal device may support a maximum of 100 MHz frequency domain resources used on one carrier to communicate with the network device, and the second-type terminal device may support a maximum of 20 MHz, 10 MHz, or 5 MHz frequency domain resources used on one carrier to communicate with the network device.

2. Quantities of transceiver antennas are different. An antenna configuration of the first-type terminal device may be greater than an antenna configuration of the second-type terminal device. For example, a minimum antenna configuration supported by the first-type terminal device may be greater than a maximum antenna configuration supported by the second-type terminal device.

3. Maximum uplink transmit powers are different. A maximum uplink transmit power of the first-type terminal device may be greater than a maximum uplink transmit power of the second-type terminal device.

4. A protocol version corresponding to the first-type terminal device is different from a protocol version corresponding to the second-type terminal device. For example, NR Rel-15 and NR Rel-16 terminal devices may be considered as the first-type terminal device, and an NR Rel-17 terminal device may be considered as the second-type terminal device.

5. The first-type terminal device and the second-type terminal device support different carrier aggregation (carrier aggregation, CA) capabilities. For example, the first-type terminal device may support carrier aggregation, but the second-type terminal device does not support carrier aggregation. For another example, both the second-type terminal device and the first-type terminal device support carrier aggregation, but a maximum quantity in carrier aggregation supported by the first-type terminal device is greater than a maximum quantity in carrier aggregation supported by the second-type terminal device.

6. A frequency division duplex (frequency division duplex, FDD) capability of the first-type terminal device is different from that of the second-type terminal device. For example, the first-type terminal device may support full-duplex FDD, and the second-type terminal device may support only half-duplex FDD.

7. The second-type terminal device and the first-type terminal device have different data processing time capabilities. For example, a minimum delay between receiving downlink data and sending a feedback of the downlink data that are performed by the first-type terminal device is less than a minimum delay between receiving downlink data and sending a feedback of the downlink data that are performed by the second-type terminal device.

8. The first-type terminal device and the second-type terminal device correspond to different uplink and/or downlink transmission peak rates.

The following describes technical terms related in embodiments of this application.

(1) A time unit may be a slot (slot) or a subframe, or the time unit includes one or more symbols. In embodiments of this application, an example in which the time unit is a slot is used. A part of a slot may be a symbol (symbol) used for uplink transmission in the slot, for example, a symbol starting from an uplink/downlink switch point to a slot boundary, or a symbol starting from an uplink/downlink switch point to a next uplink/downlink switch point and used for uplink transmission. For downlink transmission, a part of a slot may be a symbol starting from a slot boundary to an uplink/downlink switch point and used for downlink transmission, a symbol starting from an uplink/downlink switch point to a slot boundary and used for downlink transmission, or a symbol starting from an uplink/downlink switch point to a next uplink/downlink switch point and used for downlink transmission. In this application, unless otherwise specified, a symbol is a time-domain symbol. The time-domain symbol herein may be an orthogonal frequency division multiplexing (orthogonal frequency division multiplexing, OFDM) symbol, or may be a discrete Fourier transform-spread-OFDM (Discrete Fourier Transform-spread-OFDM, DFT-s-OFDM) symbol.

(2) Frequency hopping (frequency hopping) is a communication mode in which a frequency domain resource used in an information transmission process is transformed according to a rule, to obtain a frequency diversity gain. In an NR system, a PUCCH can be sent in an intra-slot (intra-slot) frequency hopping mode. Intra-slot frequency hopping means that a frequency domain resource used for information transmission changes in a slot according to a predetermined rule. For example, intra-slot two-hop frequency hopping is performed. Information that needs to be transmitted is divided into two parts, and the two parts are transmitted by using different frequency domain resources in the slot. For example, the PUCCH includes one slot in time domain, and includes two frequency domain resources f1 and f2 in frequency domain. The PUCCH sent by a transmit end includes a first part and a second part, the first part occupies symbols 6 to 9 in the slot, and the second part occupies symbols 10 to 13 in the slot. The transmit end sends the first part on the symbols 6 to 9 by using the frequency domain resource f1, and sends the second part on the symbols 10 to 3 by using the frequency domain resource f2. In embodiments of this application, information transmission may be signaling transmission, data transmission, or reference signal transmission.

(3) A bandwidth part (bandwidth part, BWP or BP) may be a segment of consecutive resources in frequency domain. The bandwidth part may also be referred to as a subband, a subband (subband) bandwidth, a narrowband, or a narrowband (narrowband) bandwidth, or may have another name. A name of the bandwidth part is not limited in embodiments of this application. For brevity, in this specification, an example in which the name is the BWP is used.

(4) A carrier bandwidth (carrier bandwidth) may be a segment of consecutive resources in frequency domain. A name of a bandwidth part of the carrier bandwidth is not limited in embodiments of this application. In this specification, for brevity, an example in which the name is BWP is used. The bandwidth part described in this specification may be a downlink bandwidth part, and is used by a terminal device to perform downlink receiving. Alternatively, the bandwidth part may be an uplink bandwidth part, and is used by a terminal device to perform uplink sending. In embodiments of this application, a bandwidth capability of the terminal device may be a channel bandwidth supported by the terminal device, a maximum channel bandwidth supported by the terminal device, a quantity of resource blocks (resource blocks, RBs) supported by the terminal device, or a maximum quantity of resource blocks supported by the terminal device.

(5) Quasi co-location (quasi co-location, QCL) may be understood as that a large-scale parameter of a channel on which a symbol on an antenna port is conveyed may be deduced from a channel on which a symbol on another antenna port is conveyed. The large-scale parameter may include a delay spread, an average delay, a Doppler spread, a Doppler offset, an average gain, a spatial reception parameter, and the like. For example, if many large-scale parameters of a channel for transmitting a symbol on another antenna port may be deduced from a channel for transmitting a symbol on one antenna port, the two antenna ports have a QCL relationship, which may also be referred to as quasi co-location of the two antenna ports.

(6) PUCCH resource: A network device sends uplink control information (uplink control information, UCI), for example, a scheduling request (scheduling request, SR) and channel state information (channel state information, CSI), to a terminal device through a PUCCH. Currently, a PUCCH resource set and a PUCCH resource are defined in a protocol, and the network device may configure one or more PUCCH resources for the terminal device. It may be understood that the PUCCH resource is classified into a common PUCCH resource and a dedicated PUCCH resource. The common PUCCH resource is a PUCCH resource that is used by a plurality of terminal devices in a cell before the network device configures the dedicated PUCCH resource for the terminal device. For example, the common PUCCH resource may be for sending a PUCCH resource of HARQ-ACK feedback information of a random access message 4 (or a random access message B). The dedicated PUCCH resource is a dedicated PUCCH resource configured by the network device for the terminal device after the terminal device enters a radio resource control (radio resource control, RRC) connected mode. It is currently specified in the NR R15/R16 protocol that in a non-shared spectrum scenario, the common PUCCH resource is sent by using intra-slot frequency hopping (intra-slot frequency hopping). The network device may send the dedicated PUCCH resource in an intra-slot frequency hopping mode based on RRC signaling configuration. The network device may configure a common PUCCH resource set, where the common PUCCH resource set includes 16 PUCCH resources, and each PUCCH resource is associated with some corresponding PUCCH parameters, for example, a PUCCH format (format), a first symbol, a duration, a physical resource block PRB offset, and a cyclic shift index (cyclic shift index) for a PUCCH transmission.

Table 1 shows a transmission configuration of a PUCCH resource. As shown in Table 1, the transmission configuration of the PUCCH resource includes a PUCCH format (format), a first symbol (first symbol) of a PUCCH, a length of the PUCCH, namely, a number of symbols (number of symbols) occupied by the PUCCH, a physical resource block (physical resource block, PRB) offset (PRB offset) of a resource corresponding to the PUCCH, an initial cyclic shift interval (set of initial CS indexes), and the like. Configuration information of a common PUCCH resource set may be carried in a system information block (system information block, SIB). The protocol specifies a sent PUCCH resource and a PRB position at which the PUCCH resource is located. The terminal device determines the PUCCH resource according to the protocol specification, and sends the PUCCH on a PRB corresponding to the determined PUCCH resource.

**Table 1**

| Index | PUCCH format | First symbol | Number of symbols | PRB offset | Set of initial CS indexes |
|-------|--------------|--------------|-------------------|------------|---------------------------|
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |

Table 2 shows PUCCHs in several formats. Table 2 shows a range of lengths in symbols (length in OFDM symbols) occupied by each PUCCH format and a corresponding number of bits (number of bits).

**Table 2**

| PUCCH format | Length in OFDM symbols | Number of bits |
|---|---|---|
| 0 | 1-2 | $\leq 2$ |
| 1 | 4-14 | $\leq 2$ |
| 2 | 1-2 | >2 |
| 3 | 4-14 | >2 |
| 4 | 4-14 | >2 |

(7) "At least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one item (piece) of the following" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, a first type and a second type are merely for distinguishing different types, but do not indicate different priorities or importance degrees of the two types. In embodiments of this application, "if" and "if" may be replaced, and unless otherwise specified, "when" and "when" may be replaced. In embodiments of this application, a random access message 4 (message 4, Msg 4) is also referred to as a conflict resolution message.

The foregoing describes a network architecture to which embodiments of this application are applicable and related terms. The following describes technical features related to the technical solutions provided in embodiments of this application.

A PUCCH is mainly for carrying UCI and a DMRS. For example, it is assumed that a duration of the PUCCH is L symbols, L1 symbols in the L symbols are for transmission of the UCI of the PUCCH, and L2 symbols in the L symbols are for transmission of the DMRS of the PUCCH. It should be understood that L1+L2=L, and L1, L2, and L are all positive integers. Transmission of the UCI of the PUCCH may be performed through intra-slot frequency hopping, or may be performed through disabled intra-slot frequency hopping. Similarly, transmission of the DMRS of the PUCCH may be performed through intra-slot frequency hopping, or may be performed through disabled intra-slot frequency hopping. A PUCCH whose duration is L is sent based on a base sequence whose length is M. A length of M depends on a width of a PUCCH frequency resource. Specifically, M is equal to a quantity of subcarriers (subcarriers) included in the PUCCH frequency resource. If the PUCCH is sent in an intra-slot frequency hopping transmission mode, an $i^{th}$ hop is transmitted based on a first base sequence, and an $(i+1)^{th}$ hop is transmitted based on a second base sequence. The first base sequence and the second base sequence are different. In most cases, a quantity of frequency subcarriers during PUCCH transmission remains unchanged. Therefore, lengths of the first base sequence and the second base sequence are equal, and both are equal to a quantity of subcarriers included in the PUCCH frequency resource. If the PUCCH is sent in a disabled intra-slot frequency hopping transmission mode, the PUCCH is transmitted based only on the first base sequence. In other words, the PUCCH is sent based on the base sequence whose length is M.

It may be understood that, the existing standard defines a plurality of base sequences, the plurality of base sequences form a plurality of base sequence groups, and each base sequence group includes one or more base sequences. A base sequence $\bar{r}_{u,v}(n)$ for sending the PUCCH is from a base sequence group u in the plurality of base sequence groups, and an index of the base sequence in the base sequence group u is v. In other words, the base sequence $\bar{r}_{u,v}(n)$ needs to be determined based on a group number u of the base sequence group and the index v of the base sequence in the base sequence group u. A finally sent sequence $r_{u,v}^{(\alpha,\beta)}$ is generated based on a cyclic shift of the base sequence. Therefore, determining further needs to be performed based on another parameter, for example, a parameter such as a cyclic shift $\alpha$, that is, $r_{u,v}^{(\alpha,\delta)}(n) = e^{j\alpha n}\bar{r}_{u,v}(n)$ , $0 \leq n < M_{ZC}$ , where $M_{ZC}$ is equal to a length of the sequence, and $\delta = 0$. For a generation method of the base sequence $\bar{r}_{u,v}(n)$, refer to section 5.2.2 in 3GPP TS 38.211 V16.0.0. For a determining method of $\alpha$, refer to section 6.3.2.2.2 in 3GPP TS 38.211 V16.0.0. Details are not described herein.

PUCCH format 1 is used as an example. UCI information carried on PUCCH format 1 is mapped to a PUCCH after the following processing is performed on the UCI information: The carried UCI information is modulated to generate a modulation symbol d(0), and d(0) is multiplied by the sequence $r_{u,v}^{(\alpha,\beta)}$ to obtain y(n), that is,

$$\text{y(n)} = \text{d}(0) * r_{u,v}^{(\alpha,\beta)}$$

, where $n = 0, 1, ..., N_{sc}^{RB} - 1$, $N_{sc}^{RB}$ is a quantity of subcarriers of one RB, and a frequency domain width of PUCCH format 1 is one RB.

Block-wise spread (block-wise spread) is performed based on y(n) and an orthogonal sequence $w_i(m)$ according to the following formulas:

$$z\left(m'N_{SF,0}^{PUCCH,1} + mN_{sc}^{RB} + \text{n}\right) = w_i(m) * y(n)$$

, where

$$\text{n} = 0,1, ..., N_{sc}^{RB} - 1$$, $m' = \begin{cases} 0 \ no \ intra-slot \ frequency \ hopping \\ 0,1 \ intra-slot \ frequency \ hopping \ enabled \end{cases}$, $\text{m} = 0,1, ..., N_{SF,m'}^{PUCCH,1} - 1$, $N_{sc}^{RB}$ is the quantity of subcarriers of the RB, the definition of $N_{SF,m'}^{PUCCH,1}$ is shown in Table 3, and the definition of $w_i(m)$ is shown in Table 4.

**Table 3**

| PUCCH length | $N_{SF,m'}^{PUCCH,1}$ | | |
| --- | --- | --- | --- |
| | No intra-slot hopping | No intra-slot hopping | |
| | $m' = 0$ | $m' = 0$ | $m' = 1$ |
| 4 | 2 | 1 | 1 |
| 5 | 2 | 1 | 1 |
| 6 | 3 | 1 | 2 |
| 7 | 3 | 1 | 2 |
| 8 | 4 | 2 | 2 |
| 9 | 4 | 2 | 2 |
| 10 | 5 | 2 | 3 |
| 11 | 5 | 2 | 3 |
| 12 | 6 | 3 | 3 |
| 13 | 6 | 3 | 3 |
| 14 | 7 | 3 | 4 |

**Table 4:**

| Orthogonal sequence $w_i(m) = e^{j2\pi\phi(m)/N_{SF,m'}^{PUCCH,1}}$ for PUCCH format 1 | | | | | | | |
| --- | --- | --- | --- | --- | --- | --- | --- |
| $N_{SF,m'}^{PUCCH,1}$ | | | | $\varphi$ | | | |
| | $i = 0$ | $i = 1$ | $i = 2$ | $i = 3$ | $i = 4$ | $i = 5$ | $i = 6$ |
| 1 | [0] | - | - | - | - | - | - |

(continued)

| $N_{SF,m'}^{PUCCH,1}$ | $i = 0$ | $i = 1$ | $i = 2$ | $i = 3$ | $i = 4$ | $i = 5$ | $i = 6$ |
|---|---|---|---|---|---|---|---|
| **Orthogonal sequence $w_i(m) = e^{j2\pi\phi(m)/N_{SF,m'}^{PUCCH,1}}$ for PUCCH format 1** $\varphi$ | | | | | | | |
| 2 | [0 0] | [0 1] | - | - | - | - | - |
| 3 | [0 0 0] | [0 1 2] | [0 2 1] | - | - | - | - |
| 4 | [0 0 0 0] | [0 2 0 2] | [0 0 2 2] | [0 2 2 0] | - | - | - |
| 5 | [0 0 0 0 0] | [0 1 2 3 4] | [0 2 4 1 3] | [0 3 1 4 2] | [0 4 3 2 1] | - | - |
| 6 | [0 0 0 0 0 0] | [0 1 2 3 4 5] | [0 2 4 0 2 4] | [0 3 0 3 0 3] | [0 4 2 0 4 2] | [0 5 3 1 6 4 2] | [0 6 5 4 3 2 1] |

Finally, the modulation symbols $z(0), \dots, z(N_{SF}^{PUCCH,s} M_{symbol} - 1)$ are mapped to REs, other than a DMRS, on the PUCCH in an order of frequency domain first and then time domain.

ADMRS of PUCCH format 1 is defined according to the following formula:

$$z\left(m' N_{SF,0}^{PUCCH,1} + m N_{sc}^{RB} + n\right) = w_i(m) * r_{u,v}^{(\alpha,\beta)}$$

, where $n = 0,1,\dots,N_{sc}^{RB} - 1$ , m =

$0,1,\dots,N_{SF,m'}^{PUCCH,1} - 1$ , and $m' = \begin{cases} 0 \ no \ intra - slot \ frequency \ hopping \\ 0,1 \ intra - slot \ frequency \ hopping \ enabled \end{cases}$ .

A sequence of PUCCH format 0 is generated according to the following formula. Finally, modulation symbols are mapped to REs of a PUCCH in an order of frequency domain first and then time domain:

$$x(l * N_{sc}^{RB} + n) = r_{u,v}^{(\alpha,\beta)},$$

where

$$n = 0,1,\dots,N_{sc}^{RB} - 1 \ and \ l = \begin{cases} 0 \ for \ single - symbol \ PUCCH \ transmission \\ 0,1 \ for \ double - symbol \ PUCCH \ transmission \end{cases}.$$

Embodiments of this application are mainly a solution related to u and v. Therefore, this specification focuses on how to determine u and v.

u=(f_{gh} + f_{ss}) mod 30, v=0, or $v = c\left(2n_{s,f}^{\mu} + n_{hop}\right)$ . Specifically, u and v depend on a higher-layer parameter pucch-GroupHopping, and the following three cases are included.

Case 1: When pucch-GroupHopping is configured as 'neither', $f_{gh}=0$, $f_{ss} = n_{ID} \bmod 30$, and v=0, where if a higher-layer parameter hoppingid is configured, $n_{ID}$ is determined based on hoppingid; if hoppingid is not configured, $n_{ID} = N_{ID}^{cell}$ , where $N_{ID}^{cell}$ is a cell identity, for example, may be a physical cell identifier (physical cell identifier, PCI).

Case 2: When pucch-GroupHopping is configured as 'enable', $f_{gh} = \left(\sum_{m=0}^{7} 2^m c\left(8\left(2n_{s,f}^{\mu} + n_{hop}\right) + m\right)\right) \bmod 30$ , , $f_{ss} = n_{ID_{mod}} 30$ , and v=0, where $c(i)$ is a pseudo-random base sequence, and initialization is performed at the beginning of each radio frame based on $c_{init} = \lfloor n_{ID}/30 \rfloor$ . If

hoppingid is configured, $n_{ID}$ is determined based on hoppingid. If hoppingid is not configured, $n_{ID} = N_{ID}^{cell}$ , where $N_{ID}^{cell}$ is a cell identity, for example, may be a physical cell identifier (physical cell identifier, PCI).

Case 3: When pucch-GroupHopping is configured as 'disable', $f_{gh}$ =0, $f_{ss}$ = $n_{IDmod}$ 30 , and $v = c\left(2n_{s,f}^{\mu} + n_{hop}\right)$ . $c(i)$ is a pseudo-random base sequence, and initialization is performed at the beginning of each radio frame based on $c_{init} = 2^5 \lfloor n_{ID}/30 \rfloor +$ ($n_{ID \ mod}$ 30). If hoppingid is configured, $n_{ID}$ is determined based on hoppingid. If hoppingid is not configured, $n_{ID} = N_{ID}^{cell}$ , where $N_{ID}^{cell}$ is a cell identity, for example, may be a physical cell identifier (physical cell identifier, PCI).

It can be learned from the foregoing three cases that, when intra-slot frequency hopping transmission is performed on a PUCCH, for one piece of transmission of the PUCCH, base sequences used for sending an $i^{th}$ hop and an $(i+1)^{th}$ hop of the PUCCH are different, that is, the PUCCH is sent based on two different base sequences. For example, u and v corresponding to the base sequence used for sending the $i^{th}$ hop of the PUCCH are determined based on $n_{hop}$ that is equal to 0, and u and v corresponding to the base sequence that is for sending the $i^{th}$ hop of the PUCCH are determined based on $n_{hop}$ that is equal to 1, as shown in FIG. 2. FIG. 2 is a schematic diagram of intra-slot frequency hopping transmission of a PUCCH. It can be learned from FIG. 2 that, the base sequence used for sending the $i^{th}$ hop of the PUCCH is $m_0$, and the base sequence used for sending the $(i+1)^{th}$ hop of the PUCCH is $m_1$. When disabled intra-slot frequency hopping transmission is performed on a PUCCH, for one piece of transmission of the PUCCH, one base sequence is used for sending the PUCCH. For example, as shown in FIG. 3, u and v corresponding to the base sequence that is for sending the PUCCH are determined based on $n_{hop}$ that is equal to 0. FIG. 3 is a schematic diagram of disabled intra-slot frequency hopping transmission of a PUCCH. It can be learned from FIG. 3 that the base sequence that is for sending the PUCCH is $m_0$.

To improve resource utilization, a PUCCH channel may be multiplexed on a same resource (for example, a resource block), to support PUCCH sending of more terminal devices. For example, a first-type terminal device and a second-type terminal device may share the PUCCH channel on the same resource. Because a maximum bandwidth W1 supported by the second-type terminal device is less than a system bandwidth, if the second-type terminal device performs transmission in W1 in an intra-slot frequency hopping mode, uplink resource fragmentation (for example, uplink resource fragmentation of a physical uplink shared channel (physical uplink shared channel, PUSCH)) may be caused. If the second-type terminal device performs frequency hopping transmission in the entire system bandwidth in the intra-slot frequency hopping mode, because W1 is less than the system bandwidth, transmission in a bandwidth other than W1 needs to be implemented through radio frequency tuning. However, a performance loss is caused in a radio frequency tuning process. Therefore, for the second-type terminal device, the intra-slot frequency hopping transmission mode may need to be disabled, that is, transmission is performed in a disabled intra-slot frequency hopping mode.

If the second-type terminal device transmits the PUCCH in the disabled intra-slot frequency hopping mode, the second-type terminal device sends the PUCCH in a slot by using a same base sequence. On a same time-frequency resource, the first-type terminal device sends an $i^{th}$ hop and an $(i+1)^{th}$ hop of a PUCCH in a slot based on different base sequences, and the second-type terminal device sends the PUCCH in the slot based on one base sequence. Therefore, the base sequence based on which the first-type terminal device sends the $(i+1)^{th}$ hop of the PUCCH is different from the base sequence based on which the second-type terminal device sends the PUCCH. For example, still refer to FIG. 2 and FIG. 3. The base sequence based on which the first-type terminal device sends the $(i+1)^{th}$ hop of the PUCCH is m1, the base sequence based on which the second-type terminal device sends the PUCCH is m0, and the base sequence m0 is not orthogonal to the base sequence m1. Consequently, the PUCCHs sent by the second-type terminal device and the first-type terminal device are not orthogonal to each other. In other words, mutual interference is caused between the PUCCHs sent by the terminal devices of the two types. Consequently, PUCCH transmission performance of the first-type terminal device and PUCCH transmission performance of the second-type terminal device deteriorate.

In view of this, embodiments of this application provide a new PUCCH transmission method. In the method, a terminal device may send a PUCCH in a slot in a disabled frequency hopping transmission mode based on two different base sequences. It may be considered that the PUCCH includes two parts, for example, a first part and a second part. The terminal device may separately send the first part and the second part based on the two different base sequences. For example, the terminal device sends the first part based on a first base sequence, and sends the second part based on a second base sequence. In a possible scenario, for example, two terminal devices share a same time-frequency resource to send PUCCHs, a first terminal device in the two terminal devices sends the PUCCH in an intra-slot frequency hopping transmission mode, and a second terminal device in the two terminal devices sends the PUCCH in a disabled intra-slot frequency hopping transmission mode. Because the second terminal device may send the PUCCH in the slot in the disabled frequency hopping transmission mode based on two different base sequences, the base sequences based on which the second terminal device sends the PUCCH may be orthogonal to base sequences based on which the first terminal device sends the PUCCH. For example, the first terminal device sends an $i^{th}$ hop of the PUCCH on F1 symbols based on a base sequence 1, and sends an $i^{th}$ hop of the PUCCH on F2 symbols based on a base sequence 2. The second terminal device may send, on the F1 symbols based on the base sequence 1, the first part included in the PUCCH, and send, on the F2 symbols based on the base sequence 2, the second part included in the PUCCH. To be specific, this enables the base sequences based on which the second terminal device sends the PUCCH to be orthogonal to or the same as the base sequences based on which the first terminal device sends the PUCCH, so that sequences generated by the second terminal device based on cyclic shifts of the base sequences are orthogonal to sequences generated by the first terminal device based on cyclic shifts of the base sequences. This can reduce interference of the two terminal devices to PUCCH receiving or PUCCH sending, and avoid deterioration of PUCCH transmission performance of the two terminal devices as much as possible.

With reference to the foregoing embodiments and related accompanying drawings, the following describes a procedure in which a terminal device sends a PUCCH. In the following description process, an example in which the PUCCH sending method and receiving method provided in embodiments of this application are applied to the network architecture shown in FIG. 1 is used. In addition, the method may be performed by two communication apparatuses. For example, the two communication apparatuses are a first communication apparatus and a second communication apparatus. The first communication apparatus may be a terminal device or a communication apparatus that can support the terminal device in implementing a function required by the method, or certainly may be another communication apparatus, for example, a chip system. The second communication apparatus may be a network device or a communication apparatus that can support the network device in implementing a function required by the method, or certainly may be another communication apparatus, for example, a chip system. Implementations of the first communication apparatus and the second communication apparatus are not limited. For example, the first communication apparatus may be the terminal device, and the second communication apparatus is the network device; or the first communication apparatus is the communication apparatus that can support the terminal device in implementing the function required by the method, and the second communication apparatus is the network device.

The following uses an example in which the PUCCH sending method provided in embodiments of this application is performed by the terminal device and the network device. In other words, an example in which the first communication apparatus is the terminal device and the second communication apparatus is the network device is used. If this embodiment is applied to the network architecture shown in FIG. 1, the terminal device described below may be the terminal device in the network architecture shown in FIG. 1, and the network device described below may be the network device in the network architecture shown in FIG. 1.

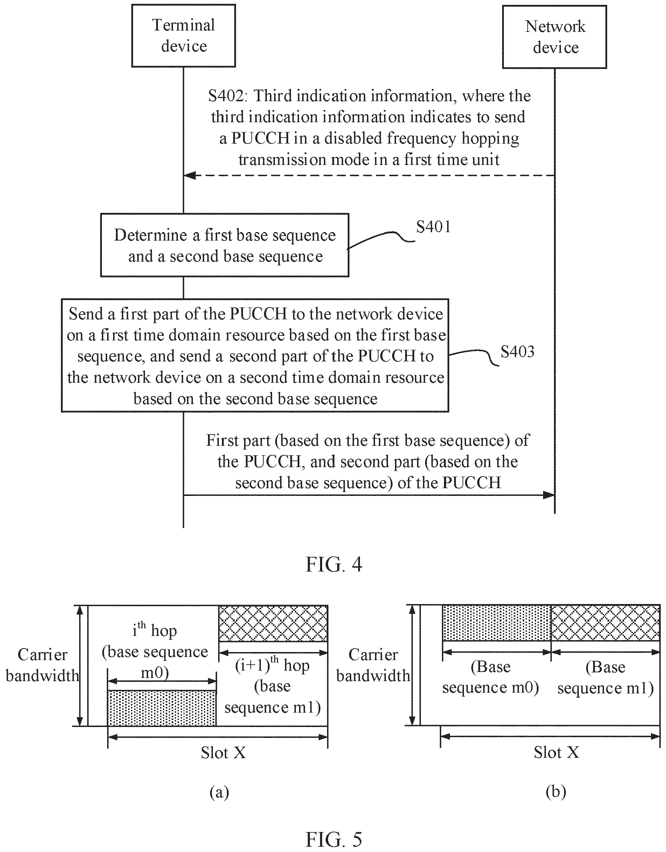

FIG. 4 is a schematic flowchart of a PUCCH sending method and receiving method according to an embodiment of this application. A specific procedure is as follows. In FIG. 4, an example in which a terminal device sends a PUCCH in a first time unit (for example, a slot, which is used as an example below) in a disabled frequency hopping transmission mode is used.

S401: The terminal device determines a first base sequence and a second base sequence.

The first base sequence and the second base sequence may be for sending a PUCCH. For example, the first base sequence may be for sending a first part included in the PUCCH, and the second base sequence may be for sending a second part included in the PUCCH. In other words, a PUCCH of one piece of transmission may be divided into a first part and a second part. The terminal device sends the first part based on the first base sequence, and sends the second part based on the second base sequence. For example, if the PUCCH occupies L consecutive symbols, the first part may occupy F consecutive symbols in the L symbols, and the second part occupies (L-F) consecutive symbols in the L symbols other than the F symbols. It may be understood that both L and F are positive integers. The terminal device sends the first part of the PUCCH on the L symbols based on the first base sequence, and sends the second part of the PUCCH on the (L-F) symbols based on the second base sequence. For ease of description, in the following, the F symbols are referred to as a first time domain resource, and the (L-F) symbols are referred to as a second time domain resource. It should be noted that, elements of the first base sequence are mapped, one by one, to REs included in a frequency resource of each symbol that is in the first time domain resource. Similarly, elements of the second base sequence are mapped, one by one, to REs included in a frequency resource of each symbol that is in the second time domain resource.

Before sending the PUCCH, the terminal device may determine (or generate) the first base sequence and the second base sequence, to avoid, as much as possible, interference to another terminal device caused when a plurality of terminal devices share a same time-frequency resource to send PUCCHs. As shown in FIG. 2 and FIG. 3, both a first-type terminal device and a second-type terminal device send PUCCHs in a slot X, a base sequence based on which the first-type terminal device sends an $(i+1)^{th}$ hop of the PUCCH is m1, and a base sequence based on which the second-type terminal device sends the PUCCH is m0. That is, the PUCCHs sent by the second-type terminal device and the first-type terminal device are not orthogonal. Consequently, the PUCCH sent by the second-type terminal device causes interference to the PUCCH sent by the first-type terminal device, and consequently, PUCCH transmission performance of the first-type terminal device deteriorates. On this basis, assuming that the terminal device sends the PUCCH in a disabled intra-slot frequency hopping transmission mode, the terminal device may determine that the first base sequence is the same as a base sequence corresponding to an $i^{th}$ hop of a PUCCH that is transmitted through intra-slot frequency hopping, and the second base sequence is the same as a base sequence corresponding to an $(i+1)^{th}$ hop of the PUCCH that is transmitted through intra-slot frequency hopping. Because a value of $n_{hop}$ corresponding to the base sequence corresponding to the $i^{th}$ hop of the PUCCH that is transmitted through intra-slot frequency hopping is 0, and a value of $n_{hop}$ corresponding to the base sequence corresponding to the $i^{th}$ hop is 1, the terminal device may determine that a value of $n_{hop}$ corresponding to the first base sequence is 0, and a value of $n_{hop}$ corresponding to the second base sequence is 1.

For example, FIG. 5 is a schematic diagram in which two terminal devices respectively send a PUCCH in an intra-slot frequency hopping transmission mode and send a PUCCH in a disabled intra-slot frequency hopping transmission mode. (a) in FIG. 5 shows a base sequence corresponding to a PUCCH sent by UE 1 in the intra-slot frequency hopping transmission mode in a slot X, and (b) in FIG. 5 shows a base sequence corresponding to a PUCCH sent by UE 2 in the disabled intra-slot frequency hopping transmission mode in the slot X. A time domain resource occupied by an $i^{th}$ hop in (a) in FIG. 5 corresponds to a time domain resource, namely, the first time domain resource, occupied by a first part included in the PUCCH in (b) in FIG. 5. A time domain resource occupied by an $(i+1)^{th}$ hop in (a) in FIG. 5 corresponds to a time domain resource, namely, the second time domain resource, occupied by a second part included in the PUCCH in (b) in FIG. 5.

It can be learned from FIG. 5 that UE 1 may send the $i^{th}$ hop of the PUCCH based on a base sequence m0, and send the $(i+1)^{th}$ hop of the PUCCH based on a base sequence m1. It may be understood that a value of n corresponding to the base sequence m0 is 0, and a value of n corresponding to the base sequence m1 is 1. Although UE 2 sends the PUCCH in the slot X hop in the slot disabled frequency hopping transmission mode, to enable the PUCCHs sent by UE 1 and UE 2 to be orthogonal, UE 2 may determine that the first base sequence is also m0, and the second base sequence is also m1. That is, a value of n corresponding to the first base sequence hop is 0, and a value of n corresponding to the second base sequence is 1. It can be learned from hop FIG. 5 that, although UE 2 sends the PUCCH in the slot X in the slot disabled frequency hopping transmission mode, UE 2 sends the first part of the PUCCH based on the base sequence m0, and sends the second part of the PUCCH based on the base sequence m1. That is, both UE 1 and UE 2 send the PUCCHs on the first time domain resource based on the base sequence m0, and both UE 1 and UE 2 send the PUCCHs on the second time domain resource based on the base sequence m1. Therefore, interference of UE 1 and UE 2 on PUCCH receiving or PUCCH sending can be reduced, and deterioration of PUCCH transmission performance of UE 1 and UE 2 can be avoided as much as possible.

PUCCHs sent by different terminal devices may occupy a same time domain resource, or may occupy different time domain resources. When sending the PUCCH in the disabled intra-slot frequency hopping transmission mode, the terminal device may determine a position of the first time domain resource and a position of the second time domain resource, to ensure that the PUCCHs sent by different terminal devices sharing a same time-frequency resource are orthogonal. A center of a time domain resource occupied by the PUCCH that is transmitted through disabled intra-slot frequency hopping may be the same as or may be different from a center of a time domain resource occupied by the PUCCH that is transmitted through intra-slot frequency hopping. For different scenarios, the terminal device determines the position of the first time domain resource and the position of the second time domain resource in different manners.

In a first scenario: The center of the time domain resource occupied by the PUCCH that is transmitted through disabled intra-slot frequency hopping is the same as the center of the time domain resource occupied by the PUCCH that is transmitted through intra-slot frequency hopping. In this scenario, the terminal device may determine the position of the first time domain resource and the position of the second time domain resource in the following two manners.

In a first determining manner, it may be predefined that a time domain resource (namely, the first time domain resource) on which the first part of the PUCCH that is transmitted through disabled intra-slot frequency hopping is located corresponds to an $i^{th}$ hop of the PUCCH that is transmitted through intra-slot frequency hopping, and it may be predefined that a time domain resource (namely, the second time domain resource) on which the second part of the PUCCH that is transmitted through disabled intra-slot frequency hopping is located corresponds to an $(i+1)^{th}$ hop of the PUCCH that is transmitted through intra-slot frequency hopping. In other words, definitions of positions of time domain resources of the first part and the second part of the PUCCH that is transmitted through disabled intra-slot frequency hopping may reuse definitions of positions of time domain resources of the $i^{th}$ hop and the $(i+1)^{th}$ hop of the PUCCH that is transmitted through intra-slot frequency hopping. For example, if a time domain resource of a first hop of the PUCCH of intra-slot frequency hopping is first consecutive $\left\lfloor N_{\text{symb}}^{\text{PUCCH}}/2 \right\rfloor$ symbols, and a time domain resource of a second hop of the PUCCH of intra-slot frequency hopping is last consecutive $(N_{symb}^{PUCCH} - \lfloor N_{symb}^{\mathrm{PUCCH}} / 2 \rfloor)$ symbols, the time domain resource of the first part of the PUCCH that is transmitted through disabled intra-slot frequency hopping is also the first consecutive

$\lfloor N_{symb}^{\mathrm{PUCCH}} / 2 \rfloor$ symbols, and the time domain resource of the first part of the PUCCH that is transmitted through disabled intra-slot frequency hopping is also first consecutive $(N_{symb}^{PUCCH} - \lfloor N_{symb}^{\mathrm{PUCCH}} / 2 \rfloor)$ symbols, where $N_{symb}^{PUCCH}$ is a quantity of time domain symbols of the PUCCH.

In a possible scenario, the center of the time domain resource occupied by the PUCCH that is transmitted through disabled intra-slot frequency hopping is the same as the center of the time domain resource occupied by the PUCCH that is transmitted through intra-slot frequency hopping. In this scenario, without a need of an indication from a network device, the terminal device determines, as the first time domain resource, the time domain resource occupied by the ith hop of the PUCCH that is transmitted through intra-slot frequency hopping, and determines the position of the time domain resource of the (i+1)th hop of the PUCCH that is transmitted through intra-slot frequency hopping. Therefore, signaling overheads are saved.

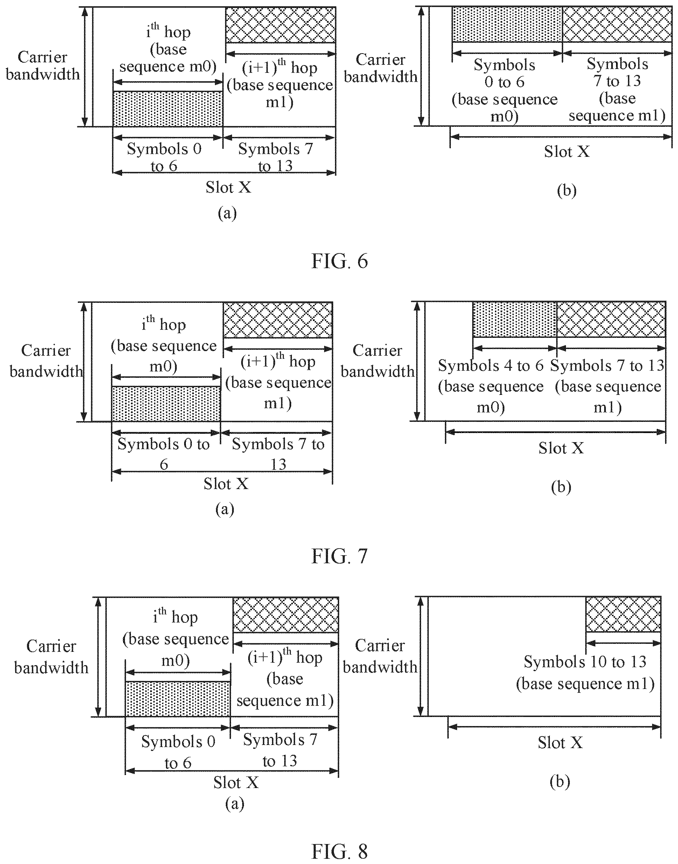

For example, refer to FIG. 6. (a) in FIG. 6 shows that UE 1 sends PUCCH 1 in an intra-slot frequency hopping transmission mode in a slot X, and (b) in FIG. 6 shows that UE 2 sends PUCCH 2 in a disabled intra-slot frequency hopping transmission mode in the slot X. Both PUCCH 1 and PUCCH 2 occupy 14 symbols (namely, symbols 0 to 13), and a center of a time domain resource occupied by PUCCH 1 is the same as a center of a time domain resource occupied by PUCCH 2. In (a) in FIG. 6, a time domain resource occupied by an ith hop of PUCCH 1 is symbols 0 to 6, and a time domain resource occupied by an (i+1)th hop of PUCCH 1 is symbols 7 to 13. UE 2 may determine that the first time domain resource is symbols 0 to 6, and the second time domain resource is symbols 7 to 13.

In a second determining manner, the network device may indicate, via signaling, the first time domain resource and/or the second time domain resource. For example, the network device may send first indication information to the terminal device. Correspondingly, the terminal device may receive the first indication information from the network device, and the first indication information may indicate the first time domain resource and/or the second time domain resource.

In an example, the first indication information may include a first index and a first value, the first index is an index of a start symbol included in the first time domain resource, and the first value is a number of symbols included in the first time domain resource. Because a total number of symbols corresponding to the first time domain resource and the second time domain resource, namely, the number L of symbols occupied by the PUCCH, is known, the terminal device may determine the second time domain resource in addition to the first time domain resource based on the first index and the first value. Similarly, the first indication information may also indicate a second index and a second value. The second index is an index of a start symbol included in the second time domain resource, and the second value is a number of symbols included in the second time domain resource. The terminal device may also determine the first time domain resource and the second time domain resource based on the first indication information.

In another example, the first indication information may include indexes of all symbols included in the first time domain resource, and the terminal device may determine, based on the first indication information, the symbols in which the first time domain resource is located, that is, determine the position of the first time domain resource, so as to determine the position of the second time domain resource. Similarly, the first indication information may also include indexes of all symbols included in the second time domain resource. Similarly, the terminal device may determine the first time domain resource and the second time domain resource based on the first indication information.

In a second scenario: The center of the time domain resource occupied by the PUCCH that is transmitted through disabled intra-slot frequency hopping is different from the center of the time domain resource occupied by the PUCCH that is transmitted through intra-slot frequency hopping. In this scenario, the terminal device may determine the first time domain resource and the second time domain resource in the foregoing second determining manner, to avoid, as much as possible, a case in which the first time domain resource and the second time domain resource that are determined in the first determining manner correspond to more than one base sequence on some symbols, and consequently PUCCHs transmitted on these symbols are not orthogonal.

For example, refer to FIG. 7. (a) in FIG. 7 shows that UE 1 sends a PUCCH 1 in an intra-slot frequency hopping transmission mode in a slot X, and (b) in FIG. 7 shows that UE 2 sends PUCCH 2 in a disabled intra-slot frequency hopping transmission mode in the slot X. A center of a time domain resource occupied by PUCCH 1 is different from a center of a time domain resource occupied by PUCCH 2. For example, PUCCH 1 occupies 14 symbols (namely, symbols 0 to 13), and the center of the time domain resource occupied by PUCCH 1 is a position adjacent to the symbol 6 and the symbol 7. PUCCH 2 occupies 10 symbols (namely, symbols 4 to 13), and the center of the time domain resource occupied by PUCCH 2 is a position adjacent to the symbol 8 and the symbol 9. In (a) in FIG. 7, a time domain resource occupied by an ith hop of PUCCH 1 is symbols 0 to 6, and a time domain resource occupied by an (i+1)th hop of PUCCH 2 is symbols 7 to 13. To ensure that PUCCH 1 and PUCCH 2 that are sent on the symbols 4 to 13 are orthogonal, the first indication information may indicate that the first time domain resource is the symbols 4 to 6, and the second time domain resource is the symbols 7 to 13.

Particularly, lengths of PUCCHs sent by different terminal devices may be different. For example, a first PUCCH sent by a first terminal device occupies L1 consecutive symbols, a second PUCCH sent by a second terminal device occupies L2 symbols, and L2 is less than L1. If the first terminal device sends the first PUCCH in an intra-slot frequency hopping transmission mode, and the second terminal device sends the second PUCCH in a disabled intra-slot frequency hopping transmission mode, the L2 symbols may correspond to L2 symbols occupied by an $i^{th}$ hop of the first PUCCH. In this case, the second terminal device sends the second PUCCH based on a base sequence that is for sending the $i^{th}$ of the first PUCCH, so that the first PUCCH and the second PUCCH 2 can be orthogonal. Therefore, when the symbols occupied by the first PUCCH sent in the disabled intra-slot frequency hopping transmission mode are located at the symbols occupied by the $i^{th}$ hop of the second PUCCH sent in the intra-slot frequency hopping transmission mode, a base sequence that is for sending the first PUCCH is the same as the base sequence that is for sending the $i^{th}$ hop of the second PUCCH.

For example, PUCCH 1 sent by UE 1 occupies the L1 consecutive symbols, PUCCH 2 sent by UE 2 occupies the L2 symbols, and L2 is less than L1. If UE 1 sends PUCCH 1 in the intra-slot frequency hopping transmission mode, and UE 2 sends PUCCH 2 in the disabled intra-slot frequency hopping transmission mode, the L2 symbols may correspond to L2 symbols occupied by the $i^{th}$ hop of PUCCH 1. In this case, UE 2 may determine the first base sequence, and sends PUCCH 2 on the first time domain resource based on the first base sequence. It may be understood that the first base sequence is the same as a base sequence that is for sending the $i^{th}$ hop of PUCCH 1, so that PUCCH 1 and PUCCH 2 can be orthogonal. The network device may determine the first base sequence, receive PUCCH 2 on the first time domain resource based on the first base sequence, receive the $i^{th}$ hop of PUCCH 1 based on the first base sequence, and receive the $(i+1)^{th}$ hop of PUCCH 1 based on the second base sequence.

For example, refer to FIG. 8. (a) in FIG. 8 shows that UE 1 sends PUCCH 1 in an intra-slot frequency hopping transmission mode in a slot X, and (b) in FIG. 8 shows that UE 2 sends PUCCH 2 in a disabled intra-slot frequency hopping transmission mode in the slot X. PUCCH 1 occupies 14 symbols (namely, symbols 0 to 13), an $i^{th}$ hop of PUCCH 1 occupies symbols 0 to 6, and an $(i+1)^{th}$ hop of PUCCH 1 occupies symbols 7 to 13. The $i^{th}$ hop of PUCCH 1 is sent based on a sequence m0, and the $(i+1)^{th}$ hop of PUCCH 1 is determined based on a sequence m1. PUCCH 2 occupies four symbols (namely, symbols 10 to 13). Because the symbols occupied by PUCCH 2 are located in the symbols occupied by the $(i+1)^{th}$ hop of PUCCH 1, UE2 may determine to send PUCCH 2 based on the sequence m1.

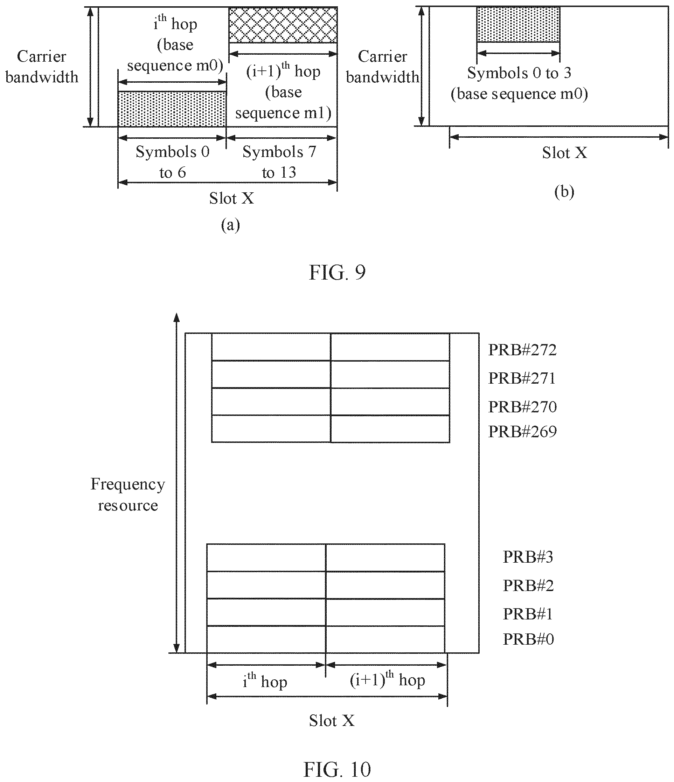

For another example, refer to FIG. 9. (a) in FIG. 9 shows that UE 1 sends PUCCH 1 in an intra-slot frequency hopping transmission mode in a slot X, and (b) in FIG. 9 shows that UE 2 sends PUCCH 2 in a disabled intra-slot frequency hopping transmission mode in the slot X. PUCCH 1 occupies 14 symbols (namely, symbols 0 to 13), an $i^{th}$ hop of PUCCH 1 occupies symbols 0 to 6, and an $(i+1)^{th}$ hop of PUCCH 1 occupies symbols 7 to 13. The $i^{th}$ hop of PUCCH 1 is sent based on a sequence m0, and the $(i+1)^{th}$ hop of PUCCH 1 is determined based on a sequence m1. PUCCH 2 occupies four symbols (namely, symbols 0 to 3). Because the symbols occupied by PUCCH 2 are located in the symbols occupied by the $i^{th}$ hop of PUCCH 1, UE2 may determine to send PUCCH 2 based on the sequence m0.

When the terminal device transmits the PUCCH in the disabled intra-slot frequency hopping mode, the terminal device transmits the PUCCH based on the first base sequence and the second base sequence, which may be predefined, or may be indicated by the network device via signaling.

S402: The network device sends third indication information to the terminal device, and correspondingly, the terminal device receives the third indication information from the network device, where the third indication information indicates to send the PUCCH in the disabled frequency hopping transmission mode in the first time unit, and the first time unit is, for example, a slot.

The network device may indicate, via signaling, a transmission mode used by the terminal device to send the PUCCH. For example, it may be predefined or preconfigured that the first-type terminal device sends the PUCCH in the intra-slot frequency hopping transmission mode on a common PUCCH resource. For the second-type terminal device, to avoid PUCCH uplink resource fragmentation, it may be predefined that the second-type terminal device sends the PUCCH in the disabled intra-slot frequency hopping transmission mode, or the network device may indicate, based on the third indication information, the second-type terminal device to send the PUCCH in the disabled intra-slot frequency hopping transmission mode. If the network device indicates, based on the third indication information, the second-type terminal device to send the PUCCH in the disabled intra-slot frequency hopping transmission mode, the second-type terminal device may determine the first base sequence and the second base sequence before sending the PUCCH. Alternatively, the network device may indicate the first-type terminal device to send the PUCCH on a common PUCCH resource (or a dedicated PUCCH resource) in the disabled intra-slot frequency hopping transmission mode, or the network device may indicate the second-type terminal device to send the PUCCH on the common PUCCH resource (or the dedicated PUCCH resource) in the intra-slot frequency hopping transmission mode. In this case, the first-type terminal device may determine the first base sequence and the second base sequence based on the indication of the network device.

A specific implementation in which the network device indicates the terminal device to send the PUCCH in the disabled intra-slot frequency hopping transmission mode is not limited in embodiments of this application. In an example, the third indication information may occupy one or more bits, and different bit statuses correspond to different PUCCH transmission modes, for example, a transmission mode such as disabled intra-slot frequency hopping, intra-slot frequency hopping, inter-slot frequency hopping, or disabled intra-slot frequency hopping. If the third indication information indicates the terminal device to send the PUCCH in the disabled intra-slot frequency hopping transmission mode, the network device may further indicate the terminal device to send the PUCCH by using two base sequences or not. For example, for the common PUCCH resource (where the slot X is used as an example), UE 1 sends a PUCCH in the slot X in the disabled intra-slot frequency hopping transmission mode, and UE 2 also sends a PUCCH in the slot X. If UE 1 is the first-type terminal device, and UE 2 is the second-type terminal device, the network device may indicate, based on the third indication information, UE 2 to send the PUCCH in the slot X through disabled intra-slot frequency hopping transmission. The PUCCH may be sent in the disabled intra-slot frequency hopping transmission mode based on one base sequence. Therefore, in embodiments of this application, the network device may alternatively indicate UE 2 to send the PUCCH in the disabled intra-slot frequency hopping transmission mode based on two base sequences. Particularly, if a time domain resource occupied by the PUCCH sent by UE 2 is located in a time domain resource occupied by an $i^{th}$ hop of the PUCCH sent by UE 1, the network device may indicate UE 2 to send the PUCCH in the disabled intra-slot frequency hopping transmission mode based on one base sequence.

In another example, the third indication information may be configuration information of the intra-slot frequency hopping transmission mode, in other words, indicate the terminal device to send the PUCCH in the intra-slot frequency hopping transmission mode or not. If the third indication information indicates the terminal device to send the PUCCH in the intra-slot frequency hopping transmission mode, the third indication information indicates that frequency domain resources of two hops of the PUCCH in the slot are different. If the third indication information indicates the terminal device to send the PUCCH in the disabled intra-slot frequency hopping transmission mode, the third indication information indicates that frequency domain resources of two hops of the PUCCH in the slot are the same. For example, for the $i^{th}$ hop and an $(i+1)^{th}$ hop of the PUCCH, the third indication information further indicates, based on 1-bit information, that a frequency domain resource of the $i^{th}$ hop is the same as a frequency domain resource of the $(i+1)^{th}$ hop, to indicate the terminal device to send the PUCCH in the disabled intra-slot frequency hopping transmission mode. Alternatively, the third indication information further indicates a PRB of the $i^{th}$ hop or a PRB of the $(i+1)^{th}$ hop. In this case, the terminal device may consider, by default based on the third indication information, that the frequency domain resource of the $i^{th}$ hop is the same as the frequency domain resource of the $(i+1)^{th}$ hop. Although the third indication information indicates an intra-slot frequency hopping configuration, the frequency domain resource of the $i^{th}$ hop is the same as the frequency domain resource of the $(i+1)^{th}$ hop, and the terminal device still sends the PUCCH in the disabled intra-slot frequency hopping transmission mode. For example, the terminal device determines, based on the third indication information, to send the PUCCH in the disabled intra-slot frequency hopping transmission mode.

It should be noted that, because transmission modes in which the first-type terminal device and the second-type terminal device send the PUCCHs on the common PUCCH resource may be predefined, S402 is not a mandatory step, that is, is an optional step. Therefore, S402 is shown by using a dashed line in FIG. 4.

A frequency domain resource corresponding to the PUCCH sent in the disabled intra-slot frequency hopping transmission mode may be the same as or different from a frequency domain resource corresponding to the PUCCH sent in the intra-slot frequency hopping transmission mode.

For example, for the common PUCCH resource, it may be specified that a frequency domain resource of a common PUCCH resource set used by the first-type terminal device is different from a frequency domain resource of a common PUCCH resource set used by the second-type terminal device, to ensure that the PUCCH sent in the disabled intra-slot frequency hopping transmission mode and the PUCCH sent in the intra-slot frequency hopping transmission mode do not interfere with each other and can be orthogonal to each other.

For another example, for the common PUCCH resource, it may be specified that a frequency domain resource of a common PUCCH resource set used by the first-type terminal device are partially or completely the same as a frequency domain resource of a common PUCCH resource set used by the second-type terminal device. In this case, PUCCH resources in which the overlapping frequency domain resources are located may be further divided into PUCCH resources used by the first-type terminal device and the second-type terminal device. For example, the PUCCH resources in which the overlapping frequency domain resources are located may be divided into a first resource set and a second resource set. The first resource set is dedicated to the first-type terminal device, and the second resource set is dedicated to the second-type terminal device. For example, the common PUCCH resource set may include 16 PUCCH resources, and occupies 16/Ncs in total. Ncs is a quantity of cyclic shifts supported on one RB, and depends on a configuration of the common PUCCH resource set. As shown in FIG. 10, it is assumed that Ncs=2, the common PUCCH resource set occupies eight PRBs in total, and numbers of the eight PRBs are 0 to 3 and 269 to 272. The PRB and/or the PRB 269 may be determined as the second resource set, and a PRB other than the PRB and/or the PRB 269 may be determined as the first resource set. It should be noted that the first resource set and the second resource set may be predefined, or may be indicated by the network device. For example, the PUCCH resources in which the overlapping frequency domain resources are located may be divided into the first resource set and the second resource set according to a preset rule. The example in FIG. 10 is still used. In a sequence of numbers, S PRBs in ascending order of numbers are determined as the first resource set, and R PRBs in descending order of numbers are determined as the second resource set. If the network device indicates the first resource set or the second resource set, the second-type terminal device uses the second resource set, and the second resource set cannot be used by the first-type terminal device.

Considering that a capacity of the common PUCCH resource is limited, to avoid affecting a capacity of the common PUCCH resource of the first-type terminal, a new initial cyclic shift interval may be introduced for the common PUCCH resource in embodiments of this application. For example, when an existing initial cyclic shift interval is {0, 3, 6, 9}, an initial cyclic shift interval used by the second-type terminal device is a value other than {0, 3, 6, 9}, and may be {1, 2, 4, 5, 7, 8, 10, 11}, for example, {1, 4, 7, 10}. For example, Table. 5 shows a transmission configuration of a PUCCH resource according to an embodiment of this application.

**Table 5**

| Index | PUCCH format | First symbol | Number of symbols | PRB offset | Set of initial CS indexes |
|---|---|---|---|---|---|
| 0 | 0 | 12 | 2 | 0 | {6, 9} |
| 1 | 0 | 12 | 2 | 0 | {2, 6, 12} |
| 2 | 0 | 12 | 2 | 3 | {2, 6, 12} |
| 3 | 1 | 10 | 4 | 0 | {3, 9} |
| 4 | 1 | 10 | 4 | 0 | {1, 4, 7, 11} |
| 5 | 1 | 10 | 4 | 2 | {1, 4, 7, 11} |
| 6 | 1 | 10 | 4 | 4 | {1, 4, 7, 11} |
| 7 | 1 | 4 | 10 | 0 | {3, 9} |
| 8 | 1 | 4 | 10 | 0 | {1, 4, 7, 11} |
| 9 | 1 | 4 | 10 | 2 | {1, 4, 7, 11} |
| 10 | 1 | 4 | 10 | 4 | {1, 4, 7, 11} |
| 11 | 1 | 0 | 14 | 0 | {3, 9} |
| 12 | 1 | 0 | 14 | 0 | {1, 4, 7, 11} |
| 13 | 1 | 0 | 14 | 2 | {1, 4, 7, 11} |
| 14 | 1 | 0 | 14 | 4 | {1, 4, 7, 11} |
| 15 | 1 | 0 | 14 | $\left\lfloor N_{\mathrm{BWP}}^{\mathrm{size}}/4 \right\rfloor$ | {1, 4, 7, 11} |

In addition, an index of a superposition orthogonal code of an existing common PUCCH resource set is 0, that is, a column of "i=0" in Table 6. In embodiments of this application, the common PUCCH resource set of the second-type terminal device may use a superposition orthogonal code whose index number is not 0. For example, a value of i is one or more in {1, 2, 3, 4, 5, 6}, in other words, more superposition orthogonal codes are used. In this way, a PUCCH capacity can be extended, to enable more users to transmit PUCCHs on one time-frequency resource.

**Table 6**

| $N_{\mathrm{SF},m'}^{\mathrm{PUCCH},1}$ | $\varphi$ | | | | | | |
|---|---|---|---|---|---|---|---|
| | $i = 0$ | $i = 1$ | $i = 2$ | $i = 3$ | $i = 4$ | $i = 5$ | $i = 6$ |
| 1 | [0] | - | - | - | - | - | - |
| 2 | [0 0] | [0 1] | - | - | - | - | - |
| 3 | [0 0 0] | [0 1 2] | [0 2 1] | - | - | - | - |

(continued)

| $N_{\mathrm{SF},m'}^{\mathrm{PUCCH,1}}$ | $\varphi$ | | | | | | |
|---|---|---|---|---|---|---|---|
| | $i = 0$ | $i = 1$ | $i = 2$ | $i = 3$ | $i = 4$ | $i = 5$ | $i = 6$ |
| 4 | [0 0 0 0] | [0 2 0 2] | [0 0 2 2] | [0 2 2 0] | - | - | - |
| 5 | [0 0 0 0 0] | [0 1 2 3 4] | [0 2 4 1 3] | [0 3 1 4 2] | [0 4 3 2 1] | - | - |
| 6 | [0 0 0 0 0 0] | [0 1 2 3 4 5] | [0 2 4 0 2 4] | [0 3 0 3 0 3] | [0 4 2 0 4 2] | [0 5 4 3 2 1] | |
| 7 | [0 0 0 0 0 0 0] | [0 1 2 3 4 5 6] | [0 2 4 6 1 3 5] | [0 3 6 2 5 1 4] | [0 4 1 5 2 6 3] | [0 5 3 1 6 4 2] | [0 6 5 4 3 2 1] |

S403: The terminal device sends the first part of the PUCCH to the network device on the first time domain resource based on the first base sequence, and sends the second part of the PUCCH to the network device on the second time domain resource based on the second base sequence. Correspondingly, the network device receives the first part of the PUCCH on the first time domain resource based on the first base sequence, and receives the second part of the PUCCH on the second time domain resource based on the second base sequence.

After determining the first base sequence and the second base sequence, the terminal device sends the first part of the PUCCH to the network device on the first time domain resource based on the first base sequence, and sends the second part of the PUCCH to the network device on the second time domain resource based on the second base sequence. In this way, even if UE 1 sends the PUCCH in the intra-slot frequency hopping transmission mode and UE 2 sends the PUCCH in the disabled intra-slot frequency hopping transmission mode on a same time-frequency resource, because UE 2 sends the PUCCH by using the first base sequence and the second base sequence, the different PUCCHs sent on the time-frequency resource may be orthogonal. For example, the first base sequence is the same as the base sequence corresponding to the $i^{th}$ hop of the PUCCH that is transmitted through intra-slot frequency hopping, and the second base sequence is the same as the base sequence corresponding to the $(i+1)^{th}$ hop of the PUCCH that is transmitted through intra-slot frequency hopping. UE 1 and UE 2 respectively transmit the PUCCH by using sequences generated based on different cyclic shifts of a same base sequence, which can ensure that the PUCCH transmitted by UE 1 is orthogonal to the PUCCH transmitted by UE 2, and avoid mutual interference between the PUCCH transmitted by UE 1 and the PUCCH transmitted by UE 2.

The foregoing mainly describes how to determine a to-be-used base sequence when the first-type terminal device and the second-type terminal device coexist and the first-type terminal device or the second-type terminal device sends the PUCCH. The following describes how to determine a frequency domain resource to be occupied by the PUCCH when the first-type terminal device or the second-type terminal device sends the PUCCH.

It may be understood that the terminal device may send HARQ-ACK feedback information for a random access message 4 by using a PUCCH resource in the common PUCCH resource set. For PUCCH transmission in the PUCCH resource set, intra-slot frequency hopping transmission is performed by default in specifications, to resist frequency selective fading of a radio channel, obtain a frequency diversity gain, and improve PUCCH transmission performance. The protocol specifies a sent PUCCH resource and a PRB position at which the PUCCH resource is located. The terminal device determines the PUCCH resource according to the protocol specification, and sends the PUCCH on a PRB corresponding to the determined PUCCH resource.

For example, the PUCCH is sent in the intra-slot frequency hopping transmission mode. Current specifications are as follows.

$$r_{\mathrm{PUCCH}} = \left\lfloor \frac{2 \cdot n_{\mathrm{CCE},0}}{N_{\mathrm{CCE}}} \right\rfloor + 2 \cdot \Delta_{\mathrm{PRI}}$$

(1) A PUCCH resource meets:                          , where $0 \le r_{PUCCH} \le 15$, $N_{CEE}$ is a total quantity of control channel elements (control channel elements, CCEs) included in a CORESET of a received PDCCH, $n_{CEE,0}$ is an index of a 1st CCE of the received PDCCH, and $\Delta_{PRI}$ is a value indicated by a PUCCH resource indication field in DCI.

(2) The PRB position for PUCCH transmission meets the following conditions.

If $\lfloor r_{\mathrm{PUCCH}}/8 \rfloor = 0$ , a PRB position of a PUCCH in an $i^{th}$ hop satisfies $RB_{\mathrm{BWP}}^{\mathrm{offset}} + \lfloor r_{\mathrm{PUCCH}}/N_{\mathrm{CS}} \rfloor$ , and a

PRB position of a PUCCH in an (i+1)th hop satisfies $N_{\mathrm{BWP}}^{\mathrm{size}} - 1 - RB_{\mathrm{BWP}}^{\mathrm{offset}} - \lfloor r_{\mathrm{PUCCH}}/N_{\mathrm{CS}} \rfloor$. If $\lfloor r_{\mathrm{PUCCH}}/8 \rfloor = 1$, a PRB position of a PUCCH in an ith hop satisfies $N_{\mathrm{BWP}}^{\mathrm{size}} - 1 - RB_{\mathrm{BWP}}^{\mathrm{offset}} - \lfloor (r_{\mathrm{PUCCH}} - 8)/N_{\mathrm{CS}} \rfloor$, and a PRB position of a PUCCH in an (i+1)th hop satisfies $RB_{\mathrm{BWP}}^{\mathrm{offset}} + \lfloor (r_{\mathrm{PUCCH}} - 8)/N_{\mathrm{CS}} \rfloor$. $N_{BWP}^{Size}$ is a size (a quantity of PRBs) of an uplink BWP, and values of $RB_{BWP}^{offset}$ and $N_{CS}$ are determined based on the configuration of the current common PUCCH resource set.

In other words, the PRB position of the PUCCH may be determined in the following two manners, for example, in a first manner, determined based on $RB_{\mathrm{BWP}}^{\mathrm{offset}} + \lfloor r_{\mathrm{PUCCH}}/N_{\mathrm{CS}} \rfloor$; and in a second manner, determined based on $N_{\mathrm{BWP}}^{\mathrm{size}} - 1 - RB_{\mathrm{BWP}}^{\mathrm{offset}} - \lfloor r_{\mathrm{PUCCH}}/N_{\mathrm{CS}} \rfloor$.

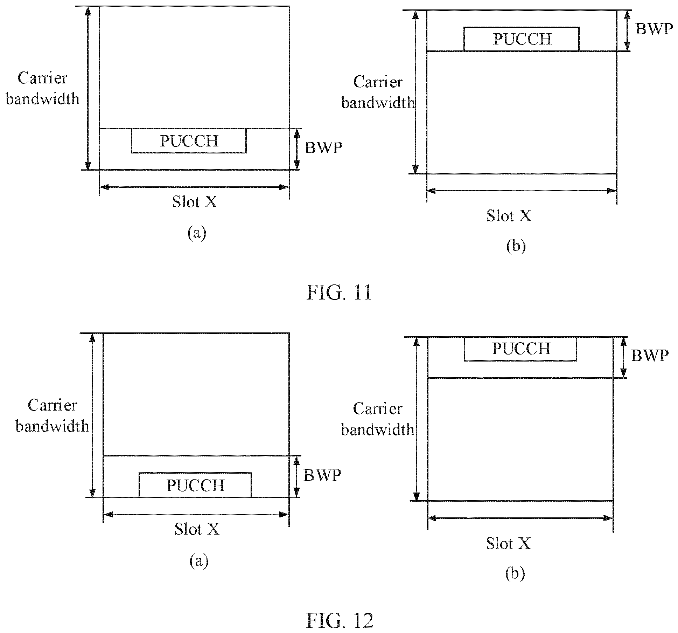

It may be understood that, in a scenario in which the first-type terminal device and the second-type terminal device coexist, the first-type terminal device sends the PUCCH in the intra-slot frequency hopping transmission mode, and the second-type terminal device uses the disabled intra-slot frequency hopping transmission mode. As shown in FIG. 11, if a frequency domain resource corresponding to the PUCCH sent by the second-type terminal device is not calculated from a lowest frequency position or a highest frequency position of a carrier bandwidth, uplink resource fragmentation still exists, causing a relatively low uplink transmission rate. It may be understood that, (a) in FIG. 11 indicates that the frequency domain resource corresponding to the PUCCH is not calculated from the lowest frequency of the carrier bandwidth, and (b) in FIG. 11 indicates that the PUCCH is not calculated from the highest frequency position of the carrier bandwidth. To avoid uplink resource fragmentation as much as possible, the frequency domain resource corresponding to the PUCCH sent by the second-type terminal device is calculated from the lowest frequency position or the highest frequency position of the carrier bandwidth. Therefore, in embodiments of this application, the PRB position of the PUCCH that is sent in the disabled intra-slot frequency hopping transmission mode may be specified.

Example 1: A protocol may specify or preconfigure that the PRB position of the PUCCH that is sent in the disabled intra-slot frequency hopping transmission mode is determined in the foregoing first manner or second manner. For example, it may be predefined that the PRB position of the PUCCH that is sent in the disabled intra-slot frequency hopping transmission mode is determined in the first manner.

Example 2: The network device may indicate, via signaling, that the PRB position of the PUCCH sent in the disabled intra-slot frequency hopping transmission mode is determined in the foregoing first manner or second manner. For example, the network device may send second indication information to the terminal device, and the second indication information may indicate the first manner or the second manner. For example, the second indication information may include information whose length is 1 bit, one state of the 1 bit corresponds to the first manner, and the other state of the 1 bit corresponds to the second manner. It may be understood that the second indication information may be carried in a SIB, RRC signaling, or DCI, and the DCI may be DCI for scheduling a Msg4 or a MsgB. Particularly, if the network device configures a plurality of BWPs, a PUCCH resource is configured for each of the plurality of BWPs. The network device may separately indicate a manner of determining a PRB position of a PUCCH resource on each of the plurality of BWPs.

Optionally, as shown in FIG. 12, if the BWP configured with the PUCCH is located at a low frequency position of the carrier bandwidth, for example, center frequency of the BWP is lower than center frequency of the carrier bandwidth, the second indication information indicates the first manner. If the BWP configured with the PUCCH is located at a high frequency position of the carrier bandwidth, for example, center frequency of the BWP is higher than center frequency of the carrier bandwidth, the second indication information indicates the second manner. It should be noted that, if the network device does not send the second indication information, the terminal device may determine, by default in the first manner, the PRB position corresponding to the PUCCH resource. It can be learned from (a) in FIG. 12 that, in the first manner, the frequency domain resource corresponding to the PUCCH may be calculated from the lowest frequency of the carrier bandwidth, and from (b) in FIG. 12 that, in the first manner, the frequency domain resource corresponding to the PUCCH may be calculated from the highest frequency position of the carrier bandwidth.

Example 3: The terminal device and the network device may determine a PRB position of a PUCCH resource based on a position of a BWP configured with the PUCCH resource. For example, still refer to FIG. 12. If the BWP configured with the PUCCH is located at a low frequency position of the carrier bandwidth, for example, center frequency of the BWP is lower than center frequency of the carrier bandwidth, the terminal device and the network device determine the PRB position of the PUCCH resource in the first manner. If the BWP configured with the PUCCH is located at a high frequency position of the carrier bandwidth, for example, center frequency of the BWP is higher than center frequency of the carrier bandwidth, the terminal device and the network device determine the PRB position of the PUCCH resource in the second manner.

It should be noted that the method for determining the PRB position of the PUCCH resource provided in embodiments of this application may be combined with the procedure shown in FIG. 4.

It may be understood that an NR system supports the network device in sending SSBs on a plurality of beams. For example, in a frequency range (frequency range, FR) 1, the network device may support a maximum of eight SSBs, in other words, the network device may send eight SSBs to the terminal device. After receiving a plurality of SSBs from the network device, the terminal device may select one from the plurality of SSBs, and send a preamble (preamble) based on a beam of the SSB. Currently, a mapping relationship between an SSB and an RO is specified. The network device may determine, based on the preamble sent by the terminal device and the RO, an SSB beam selected by the terminal device to send the preamble.

The mapping relationship between the SSB and the RO is configured by the network device based on a higher-layer parameter, and the higher-layer parameter mainly includes "msg1-FDM" and "ssb-perRACH-OccasionAndCB-PreamblesPerSSB". The parameter msg1-FDM mainly defines: There are a plurality of ROs on a frequency domain resource, for example, there are PROs, where P is an integer greater than or equal to 1, for example, {1, 2, 4, 8}. The parameter ssb-perRACH-OccasionAndCB-PreamblesPerSSB mainly defines: N SSBs are mapped (which may also be considered as associated) to one RO, and R preambles are mapped to one SSB. For example, when N is less than 1, one SSB is mapped to 1/N ROs; or when N is greater than 1, N SSBs are mapped to one RO (or it may be considered that one SSB is mapped to 1/N ROs). For example, when N=1/2, one SSB is mapped to two ROs; and when N=2, two SSBs are mapped to one RO. In other words, one SSB may be mapped to one or more ROs, and one RO may also be mapped to one or more SSBs. Each SSB is mapped to R consecutive preambles on an RO to which the SSB is mapped. If a plurality of SSBs are mapped to one RO, a start index (sequence number) of a preamble associated with each SSB

is $n \cdot N_{preamble}^{total}/N$ , where n is a relative sequence number of the SSB in the plurality of SSBs sent by the network device, and $N_{preamble}^{total}$ is a maximum quantity of preambles multiplexed on each RO.

Currently, it is specified that the SSBs may be mapped to the ROs in the following order: first, mapping in an ascending order of preamble sequence numbers in an RO; second, mapping in an ascending order of frequency resource indexes of frequency-multiplexed ROs (which mean one or more ROs in this specification); third, mapping in an ascending order of time domain resource indexes of time-divi sion multiplexed ROs in a PRACH slot; and finally, mapping in an ascending order of PRACH slot indexes.

Currently, it is specified that a maximum of eight ROs can be multiplexed in frequency domain, all the ROs that can be multiplexed is to be located in a BWP configured for the terminal device, and a bandwidth of the BWP does not include a maximum bandwidth of the terminal device. For the second-type terminal device, a bandwidth of a configured BWP is relatively small. Therefore, there are few ROs that can be used by the second-type terminal device. Consequently, access performance of the second-type terminal device is relatively low, and the second-type terminal device even cannot access a network.

Therefore, in embodiments of this application, the network device may configure a plurality of BWPs for the terminal device, an RO is configured for each of the plurality of BWPs, and all ROs in the plurality of BWPs may be jointly associated with SSBs. The terminal device may select, based on a selected SSB, an RO corresponding to the SSB, and select a BWP corresponding to the RO, to initiate random access or perform data transmission. Optionally, the plurality of BWPs are consecutive or non-consecutive in frequency domain, and a plurality of ROs configured on the plurality of BWPs may be consecutive or non-consecutive in frequency domain. For example, the plurality of BWPs may be configured on two sides of the carrier bandwidth. The plurality of BWPs may be initial uplink BWPs, or may be user-specific uplink BWPs.

The RO configured on each of the plurality of BWPs may be a dedicated RO configured for the second-type terminal device, or may be an RO multiplexed by the first-type terminal device and the second-type terminal device.

The SSB may be a cell-defining SSB (cell-defining SSB, CD-SSB), or may be a non-cell-defining SSB (NCD-SSB). The CD-SSB may be understood as an SSB associated with a SIB 1, and the NCD-SSB may be understood as an SSB not associated with the SIB 1. If the network device does not configure the NCD-SSB, the SSB associated with the RO is a CD-SSB by default. If the network device configures the NCD-SSB, the SSB associated with the RO may be a CD-SSB or an NCD-SSB. In this case, the network device may indicate, via signaling, that the SSB associated with the RO is the CD-SSB or the NCD-SSB. It may be understood that, the CD-SSB is on a synchronous raster (synchronization raster), and the NCD-SSB may be on a synchronous raster or may not be on the synchronous raster.

For an SSB, the SSB is a CD-SSB for the first-type terminal device, and the SSB is an NCD-SSB for the second-type terminal device. Alternatively, the SSB is an NCD-SSB for the first-type terminal device, and the SSB is a CD-SSB for the second-type terminal device. If both the CD-SSB and the NCD-SSB are configured in a cell or carrier, the CD-SSB and the NCD-SSB that have a same SSB index are quasi co-located or have a quasi co-location relationship. If a plurality of NCD-SSBs are configured in a cell or a carrier, the plurality of NCD-SSBs may be separately located in a plurality of BWPs, and SSB indexes included in the plurality of NCD-SSBs may be the same or different. For example, a first NCD-SSB and a second NCD-SSB are configured in a cell or a carrier. The first NCD-SSB may include SSB#0 to SSB#3, and the second NCD-SSB may include SSB#4 to SSB#7. Alternatively, the first NCD-SSB may include SSB#0 to SSB#7, and the second NCD-SSB may include SSB#0 to SSB#7.

In embodiments of this application, the SSBs may be mapped to the ROs that are on the plurality of BWPs in the following order: first, mapping in an ascending order of preamble sequence numbers in an RO; second, mapping in an ascending order of frequency resource indexes of frequency-multiplexed ROs; third, mapping in an ascending (or descending) order of BWP sequence numbers or in a BWP sequence indicated by the network device; fourth, mapping in an ascending order of time domain resource indexes of time-division multiplexed ROs in a PRACH slot; and finally, mapping in an ascending order of PRACH slot indexes.

For ease of understanding, the following describes, with reference to the accompanying drawings, how the SSBs are mapped to the ROs that are on the plurality of BWPs. The following uses an example in which the network device configures two uplink BWPs (for example, referred to as a first uplink BWP and a second uplink BWP) for the second-type terminal device. A plurality of ROs configured for the first uplink BWP are referred to as a first RO set, and a plurality of ROs configured for the second uplink BWP are referred to as a second RO set. The ROs on the plurality of BWPs may be jointly numbered, so as to reduce RAR-RANTI conflicts of random access responses (random access responses, RARs) corresponding to a plurality of ROs. The ROs on the plurality of BWPs may also be independently numbered, to reduce complexity of RO numbering. Through joint numbering and independent numbering of the ROs on the plurality of BWPs, specific implementation forms of the ROs to which the SSBs are mapped and that are on the plurality of BWPs are also different. The following uses a plurality of examples for description. The following uses an example in which the first RO set includes four ROs, the second RO set includes four ROs, and SSBs are numbered from 0 to 7, in other words, eight SSBs are SSB#0 to SSB#7.

Example 1: Both the first RO set and the second RO set are RO sets that are configured by the network device for the second-type terminal device and that are dedicated to the second-type terminal device. The four ROs included in the first RO set may be in one-to-one mapping with SSB#0 to SSB#3, and the four ROs included in the second RO set may be in one-to-one mapping with SSB#4 to SSB#7.

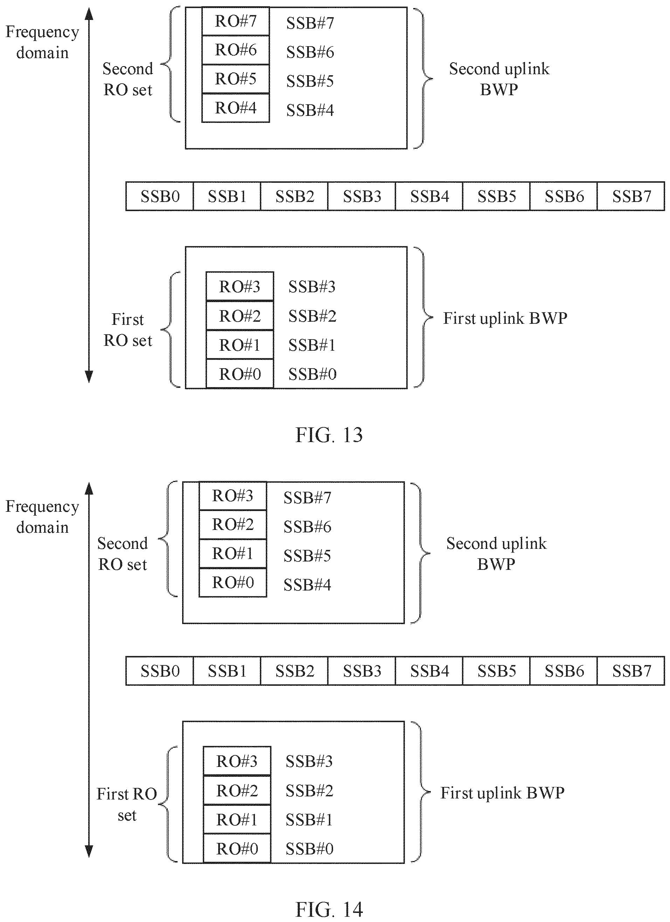

For example, the ROs on the first uplink BWP and the ROs on the second uplink BWP are jointly numbered. As shown in FIG. 13, RO indexes of the first RO set are 0 to 3, and RO indexes of the second RO set are 4 to 7. The four ROs included in the first RO set may be in one-to-one mapping with SSB#0 to SSB#3, and the four ROs included in the second RO set may be in one-to-one mapping with SSB#4 to SSB#7. Therefore, in an example, if the second-type terminal device chooses to send random access based on SSB#0, the second-type terminal device initiates random access by using RO#0 associated with SSB#0 and the first uplink BWP.

For example, the ROs on the first uplink BWP and the ROs on the second uplink BWP are independently numbered. As shown in FIG. 14, RO indexes of the first RO set are 0 to 3, and RO indexes of the second RO set are 0 to 3. Because the four ROs included in the first RO set may be in one-to-one mapping with SSB#0 to SSB#3, and the four ROs included in the second RO set may be in one-to-one mapping with SSB#4 to SSB#7, when the second-type terminal device selects to send random access based on SSB#0, the second-type terminal device sends random access by using RO#0 associated with SSB#0 and the first uplink BWP. This solution is applicable to a scenario in which RARs corresponding to the ROs that are on the first uplink BWP and the second uplink BWP are grouped for transmission. For example, the RARs corresponding to the ROs that are on the first uplink BWP are transmitted on the first uplink BWP, and the RARs corresponding to the ROs that are on the second uplink BWP are transmitted on the second uplink BWP. For another example, the RARs corresponding to the ROs that are on the first uplink BWP and the second uplink BWP are transmitted on the first uplink BWP or the second uplink BWP, but search spaces or scrambled random access radio network temporary identifiers (random access radio network temporary identifiers, RA-RNTIs) of DCI for scheduling the RARs are different. Example 2: The first RO set is an RO set not shared with the first-type terminal device, and the second RO set is an RO set that is configured by the network device for the second-type terminal device and that is dedicated to the second-type terminal device. The network device configures a total of eight ROs, namely, RO#0 to RO#7, for the first-type terminal device. The first uplink BWP of the second-type terminal device multiplexes four ROs in the eight ROs, and the four ROs are in one-to-one mapping with SSB#0 to SSB#3. Four ROs included in the second RO set may be in one-to-one mapping with SSB#4 to SSB#7.

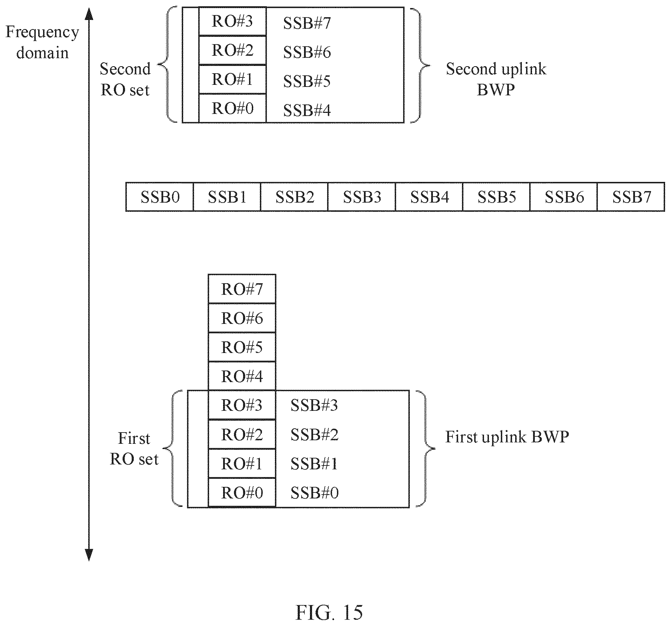

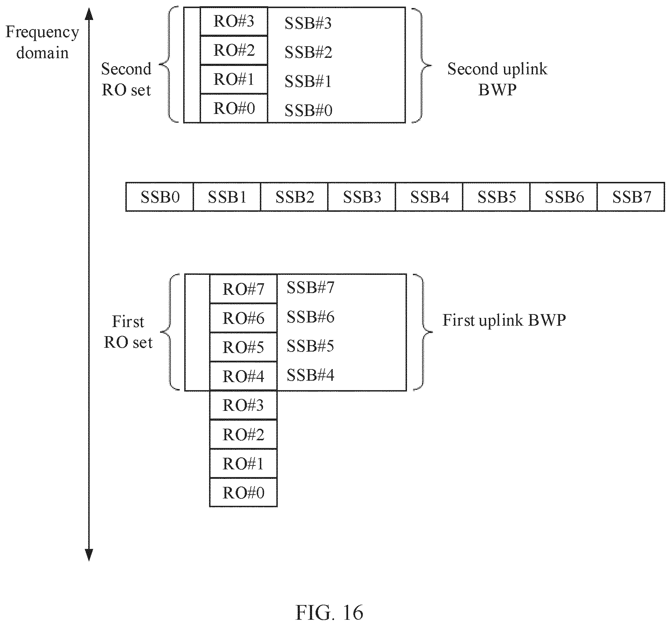

For example, refer to FIG. 15. The first RO set includes RO#0 to RO#3 in RO#0 to RO#7 that are configured by the network device for the first-type terminal device, and the second RO set includes RO#4 to RO#7 that are configured by the network device for the second-type terminal device. For another example, refer to FIG. 16. The first RO set includes RO#4 to RO#7 in RO#0 to RO#7 that are configured by the network device for the first-type terminal device, and the second RO set includes RO#0 to RO#3 that are configured by the network device for the second-type terminal device.

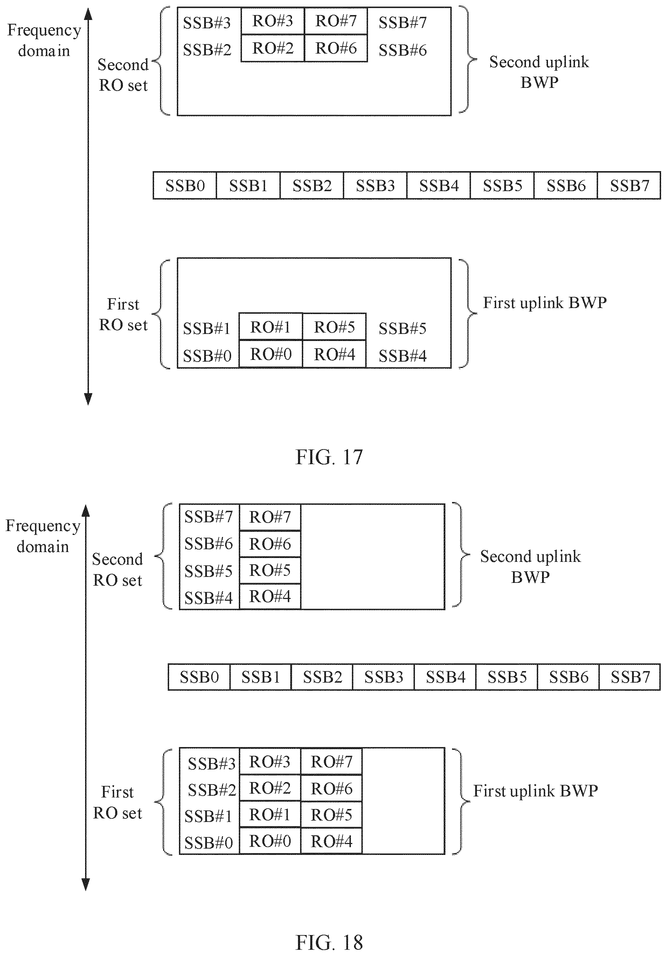

Alternatively, refer to FIG. 17. The first RO set includes RO#0, RO#1, RO#4, and RO#5 that are configured by the network device for the first-type terminal device, and the second RO set includes RO#2, RO#3, RO#6, and RO#7 that are configured by the network device for the second-type terminal device. For another example, refer to FIG. 18. The first RO set includes RO#0 to RO#3 that are defined in a conventional technology, and the second RO set includes RO#4 to RO#7 that are configured by the network device for the second-type terminal device.

In a possible implementation, the plurality of BWPs include the first uplink BWP and the second uplink BWP, and frequency domain positions of SSBs corresponding to the plurality of BWPs may be located in a first downlink BWP corresponding to the first uplink BWP, or located in a second downlink BWP corresponding to the second uplink BWP, or located outside the first downlink BWP corresponding to the first uplink BWP and the second downlink BWP corresponding to the second uplink BWP. In other words, corresponding SSBs may not be separately configured for downlink BWPs corresponding to the plurality of uplink BWPs. For example, an SSB is configured for the first downlink BWP, and no SSB is configured for the second downlink BWP. The second downlink BWP may reuse the SSB corresponding to the first downlink BWP, or reuse another SSB, thereby reducing resource overheads of SSBs.

According to the communication method provided in embodiments of this application, the plurality of BWPs can be configured for the terminal device, and the terminal device can perform random access based on the corresponding RO and SSB, thereby implementing load balancing of a communication system and improving resource utilization.

In the foregoing embodiments provided in this application, the methods provided in embodiments of this application are separately described from a perspective of interaction between the terminal device and the network device. To implement functions in the methods provided in embodiments of this application, the terminal device and the network device may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

An embodiment of this application provides a communication apparatus. The following describes, with reference to the accompanying drawings, a communication apparatus for implementing the foregoing method in embodiments of this application.

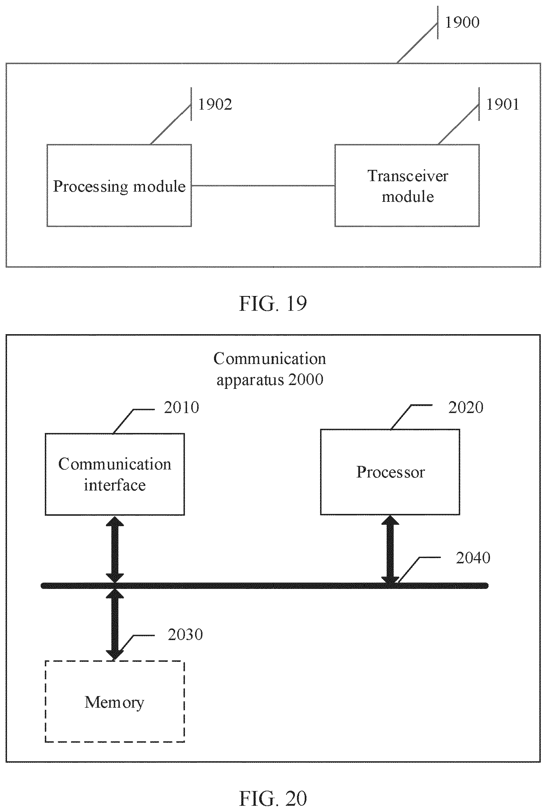

FIG. 19 is a possible example block diagram of a communication apparatus in this application. The communication apparatus 1900 may correspondingly implement functions or steps implemented by the terminal device or the network device in the foregoing method embodiments. The communication apparatus may include a transceiver module 1901 and a processing module 1902. Optionally, the communication apparatus may further include a storage module. The storage module may be configured to store instructions (code or a program) and/or data. The transceiver module 1901 and the processing module 1902 may be coupled to the storage module. For example, the processing module 1902 may read the instructions (the code or the program) and/or the data in the storage module, to implement corresponding methods. The foregoing modules may be disposed independently, or may be partially or totally integrated.

It should be understood that the processing module 1902 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The transceiver module 1901 is an interface circuit of the apparatus, and is configured to receive a signal from another apparatus. For example, when the apparatus is implemented in a form of a chip, the transceiver module 1901 is an interface circuit used by the chip to receive a signal from another chip or apparatus, or is an interface circuit used by the chip to send a signal to another chip or apparatus.

The communication apparatus 1900 may be the network device or the terminal device in the foregoing embodiments, or may be a chip used in the network device or the terminal device. For example, when the communication apparatus 1900 is the network device or the terminal device, the processing module 1902 may be, for example, a processor, and the transceiver module 1901 may be, for example, a transceiver. Optionally, the transceiver may include a radio frequency circuit, and the storage unit may be, for example, a memory. For example, when the communication apparatus 1900 is the chip used in the network device or the terminal device, the processing module 1902 may be, for example, a processor, and the transceiver module 1901 may be, for example, an input/output interface, a pin, or a circuit. The processing module 1902 may execute computer-executable instructions stored in the storage unit. Optionally, the storage unit is a storage unit in the chip, for example, a register or a cache. Alternatively, the storage unit may be a storage unit that is in the network device, the terminal device, or a location management device and that is located outside the chip, for example, a read-only memory (read-only memory, ROM) or another type of static storage device that can store static information and instructions, or a random access memory (random access memory, RAM).

In some possible implementations, the communication apparatus 1900 can correspondingly implement behavior and functions of the terminal device in the foregoing method embodiments. For example, the communication apparatus 1900 may be a terminal device, or may be a component (such as a chip or a circuit) used in the terminal device. The transceiver module 1901 may be configured to support communication between the terminal device and another network entity, for example, support communication between the terminal device and the network device shown in FIG. 1. The processing module 1902 is configured to control and manage an action of the terminal device. For example, the processing module 1902 is configured to support the terminal device in performing all operations of the terminal device in FIG. 4 except receiving and sending.

For example, the transceiver module 1901 may be configured to perform all receiving or sending operations performed by the terminal device in the embodiment shown in FIG. 4, for example, S402 and S403 in the embodiment shown in FIG. 4, and/or configured to support another process in the technology described in this specification. The processing module 1902 is configured to perform all operations performed by the terminal device in the embodiment shown in FIG. 4 except the receiving and sending operations, for example, S401 and S403 in the embodiment shown in FIG. 4, and/or configured to support another process in the technology described in this specification.

In Example 1, the processing module 1902 is configured to determine a first base sequence and a second base sequence. The transceiver module 1901 is configured to: send a first part of a PUCCH on a first time domain resource based on the first base sequence, and send a second part of the PUCCH on a second time domain resource based on the second base sequence. The terminal device sends the PUCCH in a disabled intra-time unit frequency hopping transmission mode, and the PUCCH occupies L consecutive symbols. The first time domain resource is F consecutive symbols in the L symbols, the second time domain resource is (L-F) consecutive symbols in the L symbols, and both L and F are positive integers.

In an optional implementation, elements of the first base sequence are mapped, one by one, to REs included in a frequency resource of each symbol that is in the first time domain resource. Elements of the second base sequence are mapped, one by one, to resource elements REs included in a frequency resource of each symbol that is in the second time domain resource.

In an optional implementation, a value of $n_{\text{hop}}$ corresponding to the first base sequence is 0, and a value of $n_{\text{hop}}$ corresponding to the second base sequence is 1.

In an optional implementation, the first time domain resource corresponds to a first hop of a PUCCH that is transmitted through intra-time unit frequency hopping, and the second time domain resource corresponds to a second hop of the PUCCH corresponding to intra-time unit frequency hopping.

In an optional implementation, the transceiver module 1901 is further configured to receive first indication information, where the first indication information indicates the first time domain resource and/or the second time domain resource.

In an optional implementation, the PUCCH carries a HARQ-ACK feedback for a random access message B or a random access message 4.

In an optional implementation, the PUCCH includes UCI of the PUCCH and a DMRS of the PUCCH.

In an optional implementation, the transceiver module 1901 is further configured to receive third indication information, where the third indication information indicates to send the PUCCH in the disabled intra-time unit frequency hopping mode.

In Example 2, the processing module 1902 is configured to determine a PRB position of a resource corresponding to the PUCCH. The transceiver module 1901 is configured to send the PUCCH based on the determined PRB position.

The PRB position of the resource corresponding to the PUCCH satisfies $RB_{\text{BWP}}^{\text{offset}} + \lfloor r_{\text{PUCCH}} / N_{\text{CS}} \rfloor$ or

$N_{\text{BWP}}^{\text{size}} - 1 - RB_{\text{BWP}}^{\text{offset}} - \lfloor (r_{\text{PUCCH}} - 8) / N_{\text{CS}} \rfloor$. It may be understood that $r_{PUCCH}$ is a PUCCH resource index, $N_{CS}$ is a quantity of cyclic shifts of a common PUCCH resource set, $RB_{BWP}^{offset}$ is a frequency domain offset value of the common PUCCH resource set, and $N_{BWP}^{Size}$ is a size of a bandwidth part (bandwidth part, BWP) configured with a PUCCH resource.

In an optional implementation, the transceiver module 1901 is further configured to receive second indication information, where the second indication information indicates the PRB position of the resource corresponding to the PUCCH.

In an optional implementation, the processing module 1902 is further configured to determine, based on a position of the BWP configured with the PUCCH resource, the PRB position of the resource corresponding to the PUCCH.

In Example 3, the processing module 1902 is configured to determine a first base sequence, and the transceiver module 1901 is configured to send a first PUCCH on a first time domain resource based on the first base sequence. The first PUCCH occupies L2 consecutive symbols, and is sent in the disabled intra-time unit frequency hopping transmission mode. The L2 symbols are located in L1 symbols occupied by an $i^{th}$ hop of a second PUCCH, and the second PUCCH is sent in an intra-time unit frequency hopping transmission mode. In this case, the first base sequence is the same as a base sequence that is for sending the $i^{th}$ hop of the second PUCCH.

In Example 4, the processing module 1902 is configured to determine a first RO associated with a first SSB. The transceiver module 1901 is configured to send a random access preamble to the network device based on the first RO and a first uplink BWP. The first SSB is associated with N ROs, the N ROs include Q RO sets, the Q RO sets are in one-to-one correspondence with Q uplink BWPs configured by the network device for the terminal device, the first uplink BWP is an uplink BWP corresponding to the first RO, and the first RO belongs to the N ROs. Q and P are positive integers greater than 1.

In an optional implementation, a plurality of SSBs are mapped to the Q ROs in the following order:

first, mapping in an ascending order of preamble indexes in an RO;
second, mapping in an ascending order of frequency resource indexes of frequency-multiplexed one or more ROs (ROs);
third, mapping in an ascending (or descending) order of indexes of the uplink BWPs, or in an order of the uplink BWPs indicated by the network device;
fourth, mapping in an ascending order of time domain resource indexes of time-division multiplexed ROs in a PRACH slot; and
finally, mapping in an ascending order of PRACH slot indexes.

In an optional implementation, ROs on the Q uplink BWPs may be jointly numbered or independently numbered.

In an optional implementation, an RO configured on each of the Q uplink BWPs is an RO dedicated to a second-type terminal device, or an RO configured on each of the Q uplink BWPs is an RO multiplexed by a first-type terminal device and the second-type terminal device.

In an optional implementation, the network device does not configure an NCD-SSB, and an SSB associated with the RO is a CD-SSB; or the network device configures an NCD-SSB, and an SSB associated with the RO is a CD-SSB or the NCD-SSB.

In a possible implementation, the Q uplink BWPs include a first uplink BWP and a second uplink BWP, and frequency domain positions of the plurality of SSBs are located in a first downlink BWP corresponding to the first uplink BWP, or located in a second downlink BWP corresponding to the second uplink BWP, or located outside the first downlink BWP corresponding to the first uplink BWP and the second downlink BWP corresponding to the second uplink BWP. In other words, corresponding SSBs may not be separately configured for downlink BWPs corresponding to the Q uplink BWPs. For example, an SSB is configured for the first downlink BWP, and no SSB is configured for the second downlink BWP. The second downlink BWP may reuse the SSB corresponding to the first downlink BWP, or reuse another SSB, thereby reducing resource overheads of SSBs.

In another example, the transceiver module 1901 may be configured to perform all receiving or sending operations performed by the network device in the embodiment shown in FIG. 4, for example, S402 in the embodiment shown in FIG. 4, and/or configured to support another process in the technology described in this specification. The processing module 1902 is configured to perform all operations performed by the network device in the embodiment shown in FIG. 4 except the receiving and sending operations, and/or configured to support another process in the technology described in this specification.

In Example 1, the processing module 1902 is configured to determine a first base sequence and a second base sequence. The transceiver module 1901 is configured to: receive a first part of a PUCCH on a first time domain resource based on the first base sequence, and receive a second part of the PUCCH on a second time domain resource based on the second base sequence. The PUCCH is sent in a disabled intra-time unit frequency hopping transmission mode, and the PUCCH occupies L consecutive symbols. The first time domain resource is F consecutive symbols in the L symbols, the second time domain resource is (L-F) consecutive symbols in the L symbols, and both L and F are positive integers.

In an optional implementation, elements of the first base sequence are mapped, one by one, to REs included in a frequency resource of each symbol that is in the first time domain resource. Elements of the second base sequence are mapped, one by one, to resource elements REs included in a frequency resource of each symbol that is in the second time domain resource.

In an optional implementation, a value of $n_{hop}$ corresponding to the first base sequence is 0, and a value of $n_{hop}$ corresponding to the second base sequence is 1.

In an optional implementation, the first time domain resource corresponds to a first hop of a PUCCH that is transmitted through intra-time unit frequency hopping, and the second time domain resource corresponds to a second hop of the PUCCH corresponding to intra-time unit frequency hopping.

In an optional implementation, the transceiver module 1901 is further configured to send first indication information, where the first indication information indicates the first time domain resource and/or the second time domain resource.

In an optional implementation, the PUCCH carries a HARQ-ACK feedback for a random access message B or a random access message 4.

In an optional implementation, the PUCCH includes UCI of the PUCCH and a DMRS of the PUCCH.

In an optional implementation, the transceiver module 1901 is further configured to send third indication information, where the third indication information indicates to send the PUCCH in the disabled intra-time unit frequency hopping mode.

In Example 2, the processing module 1902 is configured to determine a PRB position of a resource corresponding to the PUCCH. The transceiver module 1901 is configured to receive the PUCCH based on the determined PRB position.

The PRB position of the resource corresponding to the PUCCH satisfies $RB_{\mathrm{BWP}}^{\mathrm{offset}} + \left\lfloor r_{\mathrm{PUCCH}} / N_{\mathrm{CS}} \right\rfloor$ or

$N_{\mathrm{BWP}}^{\mathrm{size}} - 1 - RB_{\mathrm{BWP}}^{\mathrm{offset}} - \left\lfloor \left( r_{\mathrm{PUCCH}} - 8 \right) / N_{\mathrm{CS}} \right\rfloor$ . It may be understood that $r_{PUCCH}$ is a PUCCH resource index, $N_{CS}$ is a quantity of cyclic shifts of a common PUCCH resource set, $RB_{BWP}^{offset}$ is a frequency domain offset value of the common PUCCH resource set, and $N_{BWP}^{Size}$ is a size of a bandwidth part (bandwidth part, BWP) configured with a PUCCH resource.

In an optional implementation, the transceiver module 1901 is further configured to receive second indication information, where the second indication information indicates the PRB position of the resource corresponding to the PUCCH.

In an optional implementation, the processing module 1902 is further configured to determine, based on a position of the BWP configured with the PUCCH resource, the PRB position of the resource corresponding to the PUCCH.

In Example 3, the processing module 1902 is configured to determine a first base sequence, and the transceiver module 1901 is configured to receive a first PUCCH on a first time domain resource based on the first base sequence. The first PUCCH occupies L2 consecutive symbols, and is sent in the disabled intra-time unit frequency hopping transmission mode. The L2 symbols are located in L1 symbols occupied by an ith hop of a second PUCCH, and the second PUCCH is sent in an intra-time unit frequency hopping transmission mode. In this case, the first base sequence is the same as a base sequence that is for sending the ith hop of the second PUCCH.

In Example 4, the processing module 1902 is configured to configure Q uplink BWPs for a terminal device, where the Q uplink BWPs correspond to N ROs, the N ROs include Q RO sets, the Q RO sets are in one-to-one correspondence with the Q uplink BWPs, and the N ROs are mapped to (or associated with) a plurality of SSBs. The transceiver module 1901 is configured to receive a preamble from the terminal device.

In an optional implementation, a plurality of SSBs are mapped to the Q ROs in the following order:

first, mapping in an ascending order of preamble indexes in an RO;
second, mapping in an ascending order of frequency resource indexes of frequency-multiplexed one or more ROs (ROs);
third, mapping in an ascending (or descending) order of indexes of the uplink BWPs, or in an order of the uplink BWPs indicated by the network device;
fourth, mapping in an ascending order of time domain resource indexes of time-division multiplexed ROs in a PRACH slot; and
finally, mapping in an ascending order of PRACH slot indexes.

In an optional implementation, ROs on the Q uplink BWPs may be jointly numbered or independently numbered.

In an optional implementation, an RO configured on each of the Q uplink BWPs is an RO dedicated to a second-type terminal device, or an RO configured on each of the Q uplink BWPs is an RO multiplexed by a first-type terminal device and the second-type terminal device.

In an optional implementation, the network device does not configure an NCD-SSB, and an SSB associated with the RO is a CD-SSB; or the network device configures an NCD-SSB, and an SSB associated with the RO is a CD-SSB or the NCD-SSB.

In a possible implementation, the Q uplink BWPs include a first uplink BWP and a second uplink BWP, and frequency domain positions of the plurality of SSBs are located in a first downlink BWP corresponding to the first uplink BWP, or located in a second downlink BWP corresponding to the second uplink BWP, or located outside the first downlink BWP corresponding to the first uplink BWP and the second downlink BWP corresponding to the second uplink BWP. In other words, corresponding SSBs may not be separately configured for downlink BWPs corresponding to the Q uplink BWPs. For example, an SSB is configured for the first downlink BWP, and no SSB is configured for the second downlink BWP. The second downlink BWP may reuse the SSB corresponding to the first downlink BWP, or reuse another SSB, thereby reducing resource overheads of SSBs.

It should be understood that the processing module 1902 in this embodiment of this application may be implemented by a processor or a processor-related circuit component, and the transceiver module 1901 may be implemented by a transceiver or a transceiver-related circuit component.

An embodiment of this application further provides a communication system. Specifically, the communication system includes a network device and a terminal device, or may further include a plurality of network devices and a plurality of terminal devices. For example, the communication system includes a network device and a terminal device that are configured to implement related functions in the embodiment in FIG. 4. The network device is separately configured to implement functions of related network device parts in embodiments of this application, for example, configured to implement functions of related network device parts in the embodiment shown in FIG. 4. The terminal device is configured to implement functions of related terminal device parts in embodiments of this application, for example, configured to implement functions of the related terminal device in the embodiment shown in FIG. 4. For details, refer to the related descriptions in the method embodiments. Details are not described herein again.

FIG. 20 shows a communication apparatus 2000 according to an embodiment of this application. The communication apparatus 2000 may be a network device, and can implement functions of the network device in the methods provided in embodiments of this application. Alternatively, the communication apparatus 2000 may be a terminal device, and can implement functions of the terminal device in the methods provided in embodiments of this application. Alternatively, the communication apparatus 2000 may be an apparatus that can support the network device or the terminal device in implementing corresponding functions in the methods provided in embodiments of this application. The communication apparatus 2000 may be a chip system. In embodiments of this application, the chip system may include a chip, or may include a chip and another discrete component.

In terms of a hardware implementation, the transceiver module 1901 may be a transceiver, and the transceiver is integrated into the communication apparatus 2000 to form a communication interface 2010.

The communication apparatus 2000 includes at least one processor 2020. The processor 2020 may be a CPU, a microprocessor, an ASIC, or one or more integrated circuits configured to control program execution in the solutions of this application, and is configured to implement or support the communication apparatus 2000 in implementing functions of the network device or the terminal device in the methods provided in embodiments of this application. For details, refer to detailed descriptions in the method examples. Details are not described herein again.

The communication apparatus 2000 may further include at least one memory 2030, configured to store program instructions and/or data. The memory 2030 is coupled to the processor 2020. The coupling in embodiments of this application may be an indirect coupling or a communication connection between apparatuses, units, or modules in an electrical form, a mechanical form, or another form, and is used for information exchange between the apparatuses, the units, or the modules. The processor 2020 may cooperate with the memory 2030. The processor 2020 may execute the program instructions and/or the data stored in the memory 2030, so that the communication apparatus 2000 implements corresponding methods. At least one of the at least one memory may be included in the processor 2020.

The communication apparatus 2000 may further include a communication interface 2010, and is configured to communicate with another device or communication network, such as a RAN, a wireless local area network (wireless local area network, WLAN), or a wired access network by using any apparatus such as a transceiver. The communication interface 2010 is configured to communicate with another device via a transmission medium, so that an apparatus in the communication apparatus 2000 can communicate with the another device. For example, when the communication apparatus 2000 is a network device, the another device is a terminal device; or when the communication apparatus is a terminal device, the another device is a network device. The processor 2020 may send and receive data by using the communication interface 2010. The communication interface 2010 may be specifically a transceiver.

In this embodiment of this application, a specific connection medium between the communication interface 2010, the processor 2020, and the memory 2030 is not limited. In this embodiment of this application, the memory 2030, the processor 2020, and the communication interface 2010 are connected through a communication line 2040 in FIG. 20, and the bus is indicated by a thick line in FIG. 20. A connection manner between other components is merely an example for description, and is not limited thereto. The bus may be classified into an address bus, a data bus, a control bus, and the like. For ease of representation, only one thick line is for representing the bus in FIG. 20, but this does not mean that there is only one bus or only one type of bus.

In this embodiment of this application, the processor 2020 may be a general-purpose processor, a digital signal processor, an application-specific integrated circuit, a field programmable gate array or another programmable logic device, a discrete gate or transistor logic device, or a discrete hardware component. The processor can implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

The memory 2030 may be a ROM or another type of static storage device that can store static information and instructions, or a RAM or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact disc, a laser disc, an optical disc, a digital versatile disc, a Blu-ray disc, or the like), a magnetic storage medium or another magnetic storage device, or any other medium that can be used to carry or store expected program code in a form of instructions or a data structure and that can be accessed by a computer. However, the memory 2030 is not limited thereto. The memory may exist independently, and is connected to the processor through the communication line 2040. The memory may alternatively be integrated with the processor.

The memory 2030 is configured to store computer-executable instructions for performing the solutions in this application, and the processor 2020 controls execution. The processor 2020 is configured to execute the computer-executable instructions stored in the memory 2030, to implement the PUCCH sending method and/or receiving method provided in the foregoing embodiments of this application.

Optionally, the computer-executable instructions in embodiments of this application may also be referred to as application program code. This is not specifically limited in embodiments of this application.

It should be noted that the communication apparatus in the foregoing embodiments may be a terminal device, may be a circuit, or may be a chip used in a terminal device, or another component or combined device that has a function of the foregoing terminal device. When the communication apparatus is a terminal device, the transceiver module may be a transceiver, and may include an antenna, a radio frequency circuit, and the like. The processing module may be a processor, for example, a CPU. When the communication apparatus is a component having the function of the foregoing terminal device, the transceiver module may be a radio frequency unit, and the processing module may be a processor. When the communication apparatus is a chip system, the communication apparatus may be an FPGA, a dedicated ASIC, a system-on-a-chip (system-on-a-chip, SoC), a CPU, a network processor (network processor, NP), a DSP, a microcontroller unit (microcontroller unit, MCU), a programmable logic device (programmable logic device, PLD), or another integrated chip.

The processing module 1902 may be a processor of the chip system. The transceiver module 1901 or the communication interface may be an input/output interface or an interface circuit of the chip system. For example, the interface circuit may be a code/data read/write interface circuit. The interface circuit may be configured to receive code instructions (where the code instructions are stored in a memory and may be directly read from the memory, or may be read from the memory via another component), and transmit the code instructions to the processor. The processor may be configured to run the code instructions to perform the methods in the foregoing method embodiments. For another example, the interface circuit may alternatively be a signal transmission interface circuit between a communication processor and a transceiver.

For example, the communication apparatus in the foregoing embodiments may be a chip. The chip includes a logic circuit and an input/output interface, and may further include a memory. The input/output interface may be configured to receive code instructions (where the code instructions are stored in a memory and may be directly read from the memory, or may be read from the memory via another component), and transmit the code instructions to the logic circuit. The logic circuit may be configured to run the code instructions to perform the methods in the foregoing method embodiments. Alternatively, the input/output interface may be a signal transmission interface circuit between the logic circuit and the transceiver.

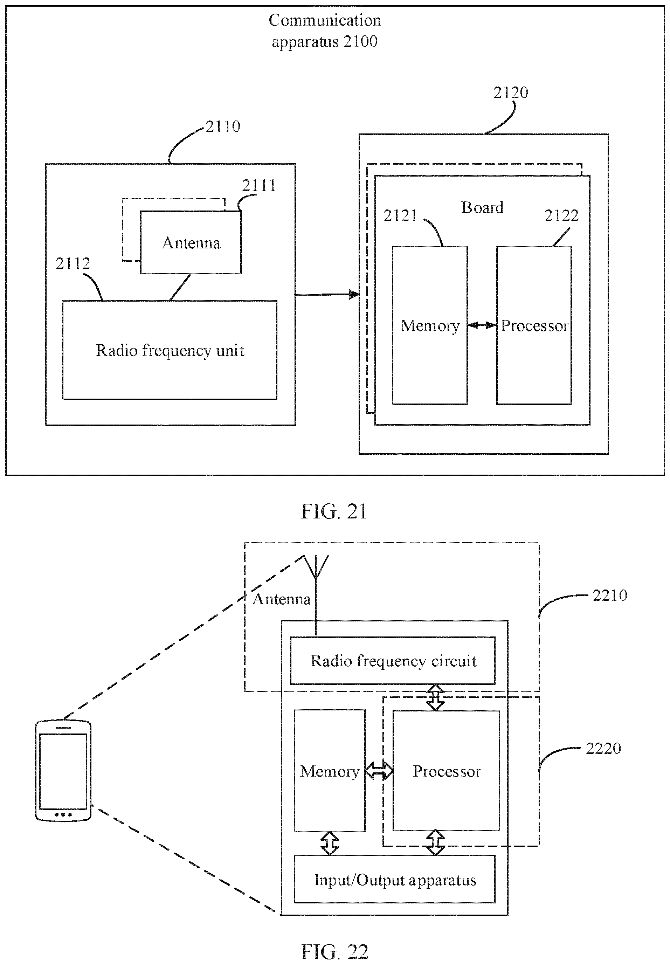

FIG. 21 is a schematic diagram of a simplified structure of a communication apparatus. For ease of understanding and illustration, in FIG. 21, for example, the communication apparatus is a base station. The base station may be used in the system shown in FIG. 1, may be the network device in FIG. 1, and performs functions of the network device in the foregoing method embodiments.

The communication apparatus 2100 may include a transceiver 2110, a memory 2121, and a processor 2122. The transceiver 2110 may be used by the communication apparatus to perform communication, for example, configured to send or receive the foregoing indication information. The memory 2121 is coupled to the processor 2122, and may be configured to store a program and data that are necessary for implementing functions by the communication apparatus 2100. The processor 2122 is configured to support the communication apparatus 2100 in performing the corresponding functions in the foregoing methods. The functions may be implemented by invoking the program stored in the memory 2121.

Specifically, the transceiver 2110 may be a wireless transceiver, and may be configured to support the communication apparatus 2100 in receiving and sending signaling and/or data through a radio air interface. The transceiver 2110 may also be referred to as a transceiver unit or a communication unit. The transceiver 2110 may include one or more radio frequency units 2112 and one or more antennas 2111. The radio frequency unit, for example, a remote radio unit (remote radio unit, RRU) or an active antenna unit (active antenna unit, AAU), may be specifically configured to: transmit a radio frequency signal, and perform conversion between the radio frequency signal and a baseband signal. The one or more antennas may be specifically configured to radiate and receive the radio frequency signal. Optionally, the transceiver 2110 may include only the foregoing radio frequency unit. In this case, the communication apparatus 2100 may include the transceiver 2110, the memory 2121, the processor 2122, and the antenna.

The memory 2121 and the processor 2122 may be integrated together or may be independent of each other. As shown in FIG. 21, the memory 2121 and the processor 2122 may be integrated into a control unit 2120 of the communication apparatus 2100. For example, the control unit 2120 may include a baseband unit (baseband unit, BBU) of an LTE base station, and the baseband unit may also be referred to as a DU. Alternatively, the control unit 2120 may include a DU and/or a CU in a base station in 5G and a future radio access technology. The control unit 2120 may include one or more antenna panels. A plurality of antenna panels may jointly support a radio access network (such as an LTE network) of a single access standard, or a plurality of antenna panels may separately support radio access networks (like an LTE network, a 5G network, and another network) of different access standards. The memory 2121 and the processor 2122 may serve one or more antenna panels. In other words, the memory 2121 and the processor 2122 may be separately disposed on each antenna panel. Alternatively, the plurality of antenna panels may share a same memory 2121 and a same processor 2122. In addition, a necessary circuit may be disposed on each antenna panel. For example, the circuit may be configured to implement coupling between the memory 2121 and the processor 2122. The transceiver 2110, the processor 2122, and the memory 2121 may be connected to each other by using a bus (bus) structure and/or another connection medium.

Based on the structure shown in FIG. 21, when the communication apparatus 2100 needs to send data, the processor 2122 may perform baseband processing on the to-be-sent data and output a baseband signal to the radio frequency unit, and the radio frequency unit performs radio frequency processing on the baseband signal and sends a radio frequency signal in an electromagnetic wave form through the antenna. When data is sent to the communication apparatus 2100, the radio frequency unit receives a radio frequency signal through the antenna, converts the radio frequency signal into a baseband signal, and outputs the baseband signal to the processor 2122. The processor 2122 converts the baseband signal into data, and processes the data.

Based on the structure shown in FIG. 21, the transceiver 2110 may be configured to perform the foregoing steps performed by the transceiver module 1901, and/or the processor 2122 may be configured to invoke instructions in the memory 2121, to perform the steps performed by the processing module 1902.

FIG. 22 is a schematic diagram of a simplified structure of a terminal device. For ease of understanding and illustration, an example in which the terminal device is a mobile phone is used in FIG. 22. As shown in FIG. 22, the terminal device includes a processor, a memory, a radio frequency circuit, an antenna, and an input/output apparatus. The processor is mainly configured to process a communication protocol and communication data, control an on board unit, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of devices may have no input/output apparatus.

When data needs to be sent, the processor performs baseband processing on the to-be-sent data and output a baseband signal to the radio frequency circuit, and the radio frequency circuit performs radio frequency processing on the baseband signal and sends a radio frequency signal to the outside in an electromagnetic wave form through the antenna. When data is sent to the device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 22 shows only one memory and one processor. In an actual device product, there may be one or more processors and one or more memories. The memory may also be referred to as a storage medium, a storage device, or the like. The memory may be disposed independently of the processor, or may be integrated with the processor. This is not limited in embodiments of this application.

In embodiments of this application, the antenna and the radio frequency circuit that have receiving and sending functions may be considered as a transceiver unit of the apparatus, and the processor having a processing function may be considered as a processing unit of the apparatus. As shown in FIG. 22, the apparatus includes a transceiver unit 2210 and a processing unit 2220. The transceiver unit 2210 may also be referred to as a transceiver machine, a transceiver, a transceiver apparatus, or the like. The processing unit 2220 may also be referred to as a processor, a processing board, a processing module, a processing apparatus, or the like. Optionally, a component for implementing a receiving function in the transceiver unit 2210 may be considered as a receiving unit, and a component for implementing a sending function in the transceiver unit 2210 may be considered as a sending unit. In other words, the transceiver unit 2210 includes the receiving unit and the sending unit. The transceiver unit 2210 sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 2210 is configured to perform a sending operation and a receiving operation on a terminal side in the foregoing method embodiments, and the processing unit 2220 is configured to perform an operation, other than the sending and receiving operations, of the terminal in the foregoing method embodiments.

When the communication apparatus is a chip apparatus or circuit, the apparatus may include a transceiver unit and a processing unit. The transceiver unit may be an input/output circuit and/or a communication interface. The processing unit is an integrated processor, a microprocessor, or an integrated circuit.

An embodiment of this application further provides a computer-readable storage medium, including instructions. When the instructions are run on a computer, the computer is enabled to perform the method performed by the network device and the terminal device in FIG. 4.

An embodiment of this application further provides a computer program product, including instructions. When the instructions are run on a computer, the computer is enabled to perform the method performed by the network device and the terminal device in FIG. 4.

An embodiment of this application provides a chip system. The chip system includes a processor, and may further include a memory, to implement functions of the terminal device and the network device in the foregoing methods. The chip system may include a chip, or may include a chip and another discrete component.

All or some of the methods in embodiments of this application may be implemented by using software, hardware, firmware, or any combination thereof. When the software is used to implement embodiments, all or a part of embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

A person skilled in the art can make various modifications and variations to this application without departing from the scope of this application. This application is intended to cover these modifications and variations of this application provided that they fall within the scope of protection defined by the following claims and their equivalent technologies.

**Claims**

1. A communication method, wherein the method comprises:

    determining, by a terminal device, a physical resource block PRB position of a resource corresponding to a physical uplink control channel PUCCH; and
    sending, by the terminal device, the PUCCH based on the PRB position, wherein

    the PRB position satisfies $RB_{\mathrm{BWP}}^{\mathrm{offset}} + \lfloor r_{\mathrm{PUCCH}}/N_{\mathrm{CS}} \rfloor$ or $N_{\mathrm{BWP}}^{\mathrm{size}} - 1 - RB_{\mathrm{BWP}}^{\mathrm{offset}} - \lfloor r_{\mathrm{PUCCH}}/N_{\mathrm{CS}} \rfloor$, $r_{PUCCH}$ is a PUCCH resource index, $N_{CS}$ is a quantity of cyclic shifts of a common PUCCH resource set, $RB_{BWP}^{offset}$ is a frequency domain offset value of the common PUCCH resource set, and $N_{BWP}^{Size}$ is a size of a bandwidth part configured with a PUCCH resource.

2. The method according to claim 1, wherein the PUCCH is transmitted in a disabled frequency hopping mode.

3. The method according to claim 1 or 2, wherein
receiving, by the terminal device, third indication information from a network device, wherein the third indication information indicates to send the PUCCH in the disabled frequency hopping transmission mode.

4. The method according to any one of claims 1 to 3, wherein
a center of a time domain resource occupied by the PUCCH that is transmitted by the terminal device through disabled intra-slot frequency hopping is different from a center of a time domain resource occupied by a PUCCH that is transmitted by a first terminal device through intra-slot frequency hopping, the terminal device belongs to a second-type terminal device, and the first terminal device belongs to a first-type terminal device.

5. The method according to any one of claims 1 to 4, wherein the method further comprises:

receiving, by the terminal device, first indication information from the network device, wherein
the first indication information indicates the terminal device to determine the PRB position based on

$$RB_{\mathrm{BWP}}^{\mathrm{offset}} + \lfloor r_{\mathrm{PUCCH}} / N_{\mathrm{CS}} \rfloor$$ ; or

the first indication information indicates the terminal device to determine the PRB position based on

$$N_{\mathrm{BWP}}^{\mathrm{size}} - 1 - RB_{\mathrm{BWP}}^{\mathrm{offset}} - \lfloor r_{\mathrm{PUCCH}} / N_{\mathrm{CS}} \rfloor$$ .

6. The method according to claim 5, wherein the first indication information is carried in a system information block.

7. A communication method, wherein the method comprises:

determining, by a network device, a physical resource block PRB position of a resource corresponding to a physical uplink control channel PUCCH; and
receiving, by the network device, the PUCCH based on the PRB position, wherein
the PRB position satisfies $RB_{\mathrm{BWP}}^{\mathrm{offset}} + \lfloor r_{\mathrm{PUCCH}} / N_{\mathrm{CS}} \rfloor$ or $N_{\mathrm{BWP}}^{\mathrm{size}} - 1 - RB_{\mathrm{BWP}}^{\mathrm{offset}} - \lfloor r_{\mathrm{PUCCH}} / N_{\mathrm{CS}} \rfloor$ , $r_{PUCCH}$ is a PUCCH resource index, $N_{CS}$ is a quantity of cyclic shifts of a common PUCCH resource set, $RB_{BWP}^{offset}$ is a frequency domain offset value of the common PUCCH resource set, and $N_{BWP}^{Size}$ is a size of a bandwidth part configured with a PUCCH resource.

8. The method according to claim 7, wherein the PUCCH is transmitted in a disabled frequency hopping mode.

9. The method according to claim 7 or 8, wherein
sending, by the network device, third indication information to a terminal device, wherein the third indication information indicates to send the PUCCH in the disabled frequency hopping transmission mode.

10. The method according to claim 9, wherein
receiving, by the network device, a PUCCH that is transmitted by the terminal device through disabled intra-slot frequency hopping, wherein a center of a time domain resource occupied by the PUCCH that is transmitted through disabled intra-slot frequency hopping is different from a center of a time domain resource occupied by a PUCCH that is transmitted by a first terminal device through intra-slot frequency hopping, the terminal device belongs to a second-type terminal device, and the first terminal device belongs to a first-type terminal device.

11. The method according to claim 9 or 10, wherein the method further comprises:

sending, by the network device, first indication information to the terminal device, wherein
the first indication information indicates to determine the PRB position based on $RB_{\mathrm{BWP}}^{\mathrm{offset}} + \lfloor r_{\mathrm{PUCCH}} / N_{\mathrm{CS}} \rfloor$ ; or
the first indication information indicates to determine the PRB position based on

$$N_{\text{BWP}}^{\text{size}} - 1 - RB_{\text{BWP}}^{\text{offset}} - \left\lfloor r_{\text{PUCCH}} / N_{\text{CS}} \right\rfloor.$$

12. The method according to claim 11, wherein the first indication information is carried in a system information block.

13. A physical uplink control channel PUCCH sending method, wherein a PUCCH is sent in a disabled intra-time unit frequency hopping transmission mode, the PUCCH occupies L consecutive symbols, and the method comprises:

determining a first base sequence and a second base sequence; and
sending a first part of the PUCCH on a first time domain resource based on the first base sequence, and sending a second part of the PUCCH on a second time domain resource based on the second base sequence, wherein the first time domain resource is F consecutive symbols in the L symbols, the second time domain resource is (L-F) consecutive symbols in the L symbols, and both L and F are positive integers.

14. The method according to claim 13, wherein elements of the first base sequence are mapped, one by one, to resource elements REs comprised in a frequency resource of each symbol that is in the first time domain resource; and elements of the second base sequence are mapped, one by one, to resource elements REs comprised in a frequency resource of each symbol that is in the second time domain resource.

15. The method according to claim 13 or 14, wherein a value of $n_{\text{hop}}$ corresponding to the first base sequence is 0, a value of $n_{\text{hop}}$ corresponding to the second base sequence is 1, and $n_{\text{hop}}$ is for determining a base sequence group in which a base sequence is located and a sequence number of the base sequence in the base sequence group.

16. The method according to any one of claims 13 to 15, wherein the first time domain resource corresponds to a first hop of a PUCCH that is transmitted through intra-time unit frequency hopping, and the second time domain resource corresponds to a second hop of the PUCCH corresponding to intra-time unit frequency hopping.

17. The method according to any one of claims 13 to 15, wherein the method further comprises:
receiving first indication information, wherein the first indication information indicates the first time domain resource and/or the second time domain resource.

18. The method according to any one of claims 13 to 17, wherein the PUCCH carries a hybrid automatic repeat request acknowledgment HARQ-ACK feedback of a random access message B or a random access message 4.

19. The method according to any one of claims 13 to 18, wherein the PUCCH comprises uplink control information UCI of the PUCCH and a demodulation reference signal DMRS of the PUCCH.

20. The method according to any one of claims 13 to 19, wherein a PRB position of a resource corresponding to the PUCCH satisfies $RB_{\text{BWP}}^{\text{offset}} + \left\lfloor r_{\text{PUCCH}} / N_{\text{CS}} \right\rfloor$ or $N_{\text{BWP}}^{\text{size}} - 1 - RB_{\text{BWP}}^{\text{offset}} - \left\lfloor \left( r_{\text{PUCCH}} - 8 \right) / N_{\text{CS}} \right\rfloor$, $r_{PUCCH}$ is a PUCCH resource index, $N_{CS}$ is a quantity of cyclic shifts of a common PUCCH resource set, $RB_{BWP}^{offset}$ is a frequency domain offset value of the common PUCCH resource set, and $N_{BWP}^{Size}$ is a size of a bandwidth part BWP configured with a PUCCH resource.

21. The method according to claim 20, wherein the method further comprises:
receiving second indication information, wherein the second indication information indicates the PRB position of the resource corresponding to the PUCCH, or the PRB position of the resource corresponding to the PUCCH is determined based on a position of the BWP configured with the PUCCH resource.

22. A physical uplink control channel PUCCH receiving method, wherein the method comprises:

determining a first base sequence and a second base sequence; and
receiving a first part of a PUCCH on a first time domain resource based on the first base sequence, and receiving a second part of the PUCCH on a second time domain resource based on the second base sequence, wherein the PUCCH is sent in a disabled intra-time unit frequency hopping transmission mode, the PUCCH occupies L consecutive symbols, the first time domain resource is F consecutive symbols in the L symbols, the second time domain resource is (L-F) consecutive symbols in the L symbols, and both L and F are positive integers.

23. The method according to claim 22, wherein elements of the first base sequence are mapped, one by one, to resource elements REs comprised in a frequency resource of each symbol that is in the first time domain resource; and elements of the second base sequence are mapped, one by one, to resource elements REs comprised in a frequency resource of each symbol that is in the second time domain resource.

24. The method according to claim 22 or 23, wherein a value of $n_{\text{hop}}$ corresponding to the first base sequence is 0, a value of $n_{\text{hop}}$ corresponding to the second base sequence is 1, and $n_{\text{hop}}$ is for determining a base sequence group in which a base sequence is located and a sequence number of the base sequence in the base sequence group.

25. The method according to any one of claims 22 to 24, wherein the first time domain resource corresponds to a first hop of a PUCCH that is transmitted through intra-time unit frequency hopping, and the second time domain resource corresponds to a second hop of the PUCCH corresponding to intra-time unit frequency hopping.

26. The method according to any one of claims 22 to 24, wherein the method further comprises:
sending first indication information, wherein the first indication information indicates the first time domain resource and/or the second time domain resource.

27. The method according to any one of claims 22 to 26, wherein the PUCCH carries a hybrid automatic repeat request acknowledgment HARQ-ACK feedback of a random access message B or a random access message 4.

28. The method according to any one of claims 22 to 27, wherein the PUCCH comprises uplink control information UCI of the PUCCH and a demodulation reference signal DMRS of the PUCCH.

29. The method according to any one of claims 22 to 28, wherein a PRB position of a resource corresponding to the PUCCH satisfies $RB_{\text{BWP}}^{\text{offset}} + \lfloor r_{\text{PUCCH}}/N_{\text{CS}} \rfloor$ or $N_{\text{BWP}}^{\text{size}} - 1 - RB_{\text{BWP}}^{\text{offset}} - \lfloor (r_{\text{PUCCH}} - 8)/N_{\text{CS}} \rfloor$, $r_{PUCCH}$ is a PUCCH resource index, $N_{CS}$ is a quantity of cyclic shifts of a common PUCCH resource set, $RB_{BWP}^{offset}$ is a frequency domain offset value of the common PUCCH resource set, and $N_{BWP}^{Size}$ is a size of a bandwidth part BWP configured with a PUCCH resource.

30. The method according to claim 29, wherein the method further comprises:
sending second indication information, wherein the second indication information indicates the PRB position of the resource corresponding to the PUCCH, or the PRB position of the resource corresponding to the PUCCH is determined based on a position of the BWP configured with the PUCCH resource.

31. A communication apparatus, comprising a processing module and a transceiver module, wherein

the processing module is configured to determine a physical resource block PRB position of a resource corresponding to a physical uplink control channel PUCCH; and
the transceiver module is configured to send the PUCCH based on the PRB position, wherein
the PRB position satisfies $RB_{\text{BWP}}^{\text{offset}} + \lfloor r_{\text{PUCCH}}/N_{\text{CS}} \rfloor$ or $N_{\text{BWP}}^{\text{size}} - 1 - RB_{\text{BWP}}^{\text{offset}} - \lfloor r_{\text{PUCCH}}/N_{\text{CS}} \rfloor$, $r_{PUCCH}$ is a PUCCH resource index, $N_{CS}$ is a quantity of cyclic shifts of a common PUCCH resource set, $RB_{BWP}^{offset}$ is a frequency domain offset value of the common PUCCH resource set, and $N_{BWP}^{Size}$ is a size of a bandwidth part configured with a PUCCH resource.

32. The apparatus according to claim 31, wherein the PUCCH is transmitted in a disabled frequency hopping mode.

33. The apparatus according to claim 31 or 32, wherein the transceiver module is further configured to:
receive third indication information from a network device, wherein the third indication information indicates to send the PUCCH in the disabled frequency hopping transmission mode.

**34.** The apparatus according to any one of claims 31 to 33, wherein
a center of a time domain resource occupied by the PUCCH that is transmitted by the communication apparatus through disabled intra-slot frequency hopping is different from a center of a time domain resource occupied by a PUCCH that is transmitted by a first terminal device through intra-slot frequency hopping, the communication apparatus belongs to a second-type terminal device, and the first terminal device belongs to a first-type terminal device.

**35.** The apparatus according to any one of claims 31 to 34, wherein the transceiver module is further configured to:

receive first indication information from the network device, wherein
the first indication information indicates the terminal device to determine the PRB position based on

$$RB_{\mathrm{BWP}}^{\mathrm{offset}} + \left\lfloor r_{\mathrm{PUCCH}}/N_{\mathrm{CS}} \right\rfloor$$ ; or

the first indication information indicates the terminal device to determine the PRB position based on

$$N_{\mathrm{BWP}}^{\mathrm{size}} - 1 - RB_{\mathrm{BWP}}^{\mathrm{offset}} - \left\lfloor r_{\mathrm{PUCCH}}/N_{\mathrm{CS}} \right\rfloor .$$

**36.** The apparatus according to claim 35, wherein the first indication information is carried in a system information block.

**37.** A communication apparatus, comprising a processing module and a transceiver module, wherein

the processing module is configured to determine a physical resource block PRB position of a resource corresponding to a physical uplink control channel PUCCH; and
the transceiver module is configured to receive the PUCCH based on the PRB position, wherein

the PRB position satisfies $RB_{\mathrm{BWP}}^{\mathrm{offset}} + \left\lfloor r_{\mathrm{PUCCH}}/N_{\mathrm{CS}} \right\rfloor$ or $N_{\mathrm{BWP}}^{\mathrm{size}} - 1 - RB_{\mathrm{BWP}}^{\mathrm{offset}} - \left\lfloor r_{\mathrm{PUCCH}}/N_{\mathrm{CS}} \right\rfloor$ , $r_{PUCCH}$ is a PUCCH resource index, $N_{CS}$ is a quantity of cyclic shifts of a common PUCCH resource set, $RB_{BWP}^{offset}$ is a frequency domain offset value of the common PUCCH resource set, and $N_{BWP}^{Size}$ is a size of a bandwidth part configured with a PUCCH resource.

**38.** The apparatus according to claim 37, wherein the PUCCH is transmitted in a disabled frequency hopping mode.

**39.** The apparatus according to claim 37 or 38, wherein the transceiver module is further configured to:
send third indication information to a terminal device, wherein the third indication information indicates to send the PUCCH in the disabled frequency hopping transmission mode.

**40.** The apparatus according to claim 39, wherein the transceiver module is further configured to:
receive a PUCCH that is transmitted by the terminal device through disabled intra-slot frequency hopping, wherein a center of a time domain resource occupied by the PUCCH that is transmitted through disabled intra-slot frequency hopping is different from a center of a time domain resource occupied by a PUCCH that is transmitted by a first terminal device through intra-slot frequency hopping, the terminal device belongs to a second-type terminal device, and the first terminal device belongs to a first-type terminal device.

**41.** The apparatus according to claim 39 or 40, wherein the transceiver module is further configured to:

send first indication information to the terminal device, wherein
the first indication information indicates to determine the PRB position based on

$$RB_{\mathrm{BWP}}^{\mathrm{offset}} + \left\lfloor r_{\mathrm{PUCCH}}/N_{\mathrm{CS}} \right\rfloor;$$

or
the first indication information indicates to determine the PRB position based on

$$N_{\mathrm{BWP}}^{\mathrm{size}} - 1 - RB_{\mathrm{BWP}}^{\mathrm{offset}} - \lfloor r_{\mathrm{PUCCH}}/N_{\mathrm{CS}} \rfloor.$$

**42.** The apparatus according to claim 41, wherein the first indication information is carried in a system information block.

**43.** A communication apparatus, comprising a processing module and a transceiver module, wherein

the processing module is configured to determine a first base sequence and a second base sequence; and
the transceiver module is configured to: send a first part of a PUCCH on a first time domain resource based on the first base sequence, and send a second part of the PUCCH on a second time domain resource based on the second base sequence, wherein the PUCCH is sent in a disabled intra-time unit frequency hopping transmission mode, the PUCCH occupies L consecutive symbols, the first time domain resource is F consecutive symbols in the L symbols, the second time domain resource is (L-F) consecutive symbols in the L symbols, and both L and F are positive integers.

**44.** The communication apparatus according to claim 43, wherein elements of the first base sequence are mapped, one by one, to resource elements REs comprised in a frequency resource of each symbol that is in the first time domain resource; and
elements of the second base sequence are mapped, one by one, to resource elements REs comprised in a frequency resource of each symbol that is in the second time domain resource.

**45.** The communication apparatus according to claim 43 or 44, wherein a value of $n_{\mathrm{hop}}$ corresponding to the first base sequence is 0, a value of $n_{\mathrm{hop}}$ corresponding to the second base sequence is 1, and $n_{\mathrm{hop}}$ is for determining a base sequence group in which a base sequence is located and a sequence number of the base sequence in the base sequence group.

**46.** The communication apparatus according to any one of claims 43 to 45, wherein the transceiver module is further configured to:
receive first indication information, wherein the first indication information indicates the first time domain resource and/or the second time domain resource.

**47.** The communication apparatus according to any one of claims 43 to 46, wherein a PRB position of a resource corresponding to the PUCCH satisfies $RB_{\mathrm{BWP}}^{\mathrm{offset}} + \lfloor r_{\mathrm{PUCCH}}/N_{\mathrm{CS}} \rfloor$ or $N_{\mathrm{BWP}}^{\mathrm{size}} - 1 - RB_{\mathrm{BWP}}^{\mathrm{offset}} - \lfloor (r_{\mathrm{PUCCH}} - 8)/N_{\mathrm{CS}} \rfloor$ , $r_{PUCCH}$ is a PUCCH resource index, $N_{CS}$ is a quantity of cyclic shifts of a common PUCCH resource set, $RB_{BWP}^{offset}$ is a frequency domain offset value of the common PUCCH resource set, and $N_{BWP}^{Size}$ is a size of a bandwidth part BWP configured with a PUCCH resource.

**48.** The communication apparatus according to claim 47, wherein the transceiver module is further configured to:
receive second indication information, wherein the second indication information indicates the PRB position of the resource corresponding to the PUCCH, or the PRB position of the resource corresponding to the PUCCH is determined based on a position of the BWP configured with the PUCCH resource.

**49.** A communication apparatus, comprising a processing module and a transceiver module, wherein

the processing module is configured to determine a first base sequence and a second base sequence; and
the transceiver module is configured to: receive a first part of a PUCCH on a first time domain resource based on the first base sequence, and receive a second part of the PUCCH on a second time domain resource based on the second base sequence, wherein the PUCCH is sent in a disabled intra-time unit frequency hopping transmission mode, the PUCCH occupies L consecutive symbols, the first time domain resource is F consecutive symbols in the L symbols, the second time domain resource is (L-F) consecutive symbols in the L symbols, and both L and F are positive integers.

**50.** The communication apparatus according to claim 49, wherein elements of the first base sequence are mapped, one by one, to resource elements REs comprised in a frequency resource of each symbol that is in the first time domain resource; and
elements of the second base sequence are mapped, one by one, to resource elements REs comprised in a frequency resource of each symbol that is in the second time domain resource.

51. The communication apparatus according to claim 49 or 50, wherein a value of $n_{\text{hop}}$ corresponding to the first base sequence is 0, a value of $n_{\text{hop}}$ corresponding to the second base sequence is 1, and $n_{\text{hop}}$ is for determining a base sequence group in which a base sequence is located and a sequence number of the base sequence in the base sequence group.

52. The communication apparatus according to any one of claims 49 to 51, wherein the transceiver module is further configured to:
send first indication information, wherein the first indication information indicates the first time domain resource and/or the second time domain resource.

53. The communication apparatus according to any one of claims 49 to 52, wherein a PRB position of a resource corresponding to the PUCCH satisfies $RB_{\text{BWP}}^{\text{offset}} + \left\lfloor r_{\text{PUCCH}}/N_{\text{CS}} \right\rfloor$ or $N_{\text{BWP}}^{\text{size}} - 1 - RB_{\text{BWP}}^{\text{offset}} - \left\lfloor \left( r_{\text{PUCCH}} - 8 \right)/N_{\text{CS}} \right\rfloor$, $r_{PUCCH}$ is a PUCCH resource index, $N_{CS}$ is a quantity of cyclic shifts of a common PUCCH resource set, $RB_{BWP}^{offset}$ is a frequency domain offset value of the common PUCCH resource set, and $N_{BWP}^{Size}$ is a size of a bandwidth part BWP configured with a PUCCH resource.

54. The communication apparatus according to claim 53, wherein the transceiver module is further configured to:
send second indication information, wherein the second indication information indicates the PRB position of the resource corresponding to the PUCCH, or the PRB position of the resource corresponding to the PUCCH is determined based on a position of the BWP configured with the PUCCH resource.

55. A computer-readable storage medium, wherein the computer-readable storage medium stores computer instructions; and when the computer instructions are executed, a computer is enabled to perform the method according to any one of claims 1 to 6, or the computer is enabled to perform the method according to any one of claims 7 to 12.

56. A computer-readable storage medium, wherein the computer-readable storage medium stores computer instructions; and when the computer instructions are executed, a computer is enabled to perform the method according to any one of claims 13 to 21, or the computer is enabled to perform the method according to any one of claims 22 to 30.

FIG. 1

FIG. 2

FIG. 3

Terminal
device

Network
device

S402: Third indication information, where the
third indication information indicates to send
a PUCCH in a disabled frequency hopping
transmission mode in a first time unit

Determine a first base sequence
and a second base sequence

S401

Send a first part of the PUCCH to the network device
on a first time domain resource based on the first base
sequence, and send a second part of the PUCCH to
the network device on a second time domain resource
based on the second base sequence

S403

First part (based on the first base sequence) of
the PUCCH, and second part (based on the
second base sequence) of the PUCCH

FIG. 4

Carrier
bandwidth

$i^{th}$ hop
(base sequence
m0)

$(i+1)^{th}$ hop
(base
sequence m1)

Slot X

(a)

Carrier
bandwidth

(Base
sequence m0)

(Base
sequence m1)

Slot X

(b)

FIG. 5

FIG. 6

FIG. 7

FIG. 8

FIG. 9

FIG. 10

FIG. 11

FIG. 12

FIG. 13

FIG. 14

FIG. 15

Frequency domain

Second RO set

| RO#3 | SSB#3 |
| RO#2 | SSB#2 |
| RO#1 | SSB#1 |
| RO#0 | SSB#0 |

Second uplink BWP

| SSB0 | SSB1 | SSB2 | SSB3 | SSB4 | SSB5 | SSB6 | SSB7 |

First RO set

| RO#7 | SSB#7 |
| RO#6 | SSB#6 |
| RO#5 | SSB#5 |
| RO#4 | SSB#4 |

First uplink BWP

| RO#3 |
| RO#2 |
| RO#1 |
| RO#0 |

FIG. 16

FIG. 17

FIG. 18

1900

Processing module 1902

Transceiver module 1901

FIG. 19

Communication apparatus 2000

Communication interface 2010

Processor 2020

2040

Memory 2030

FIG. 20

Communication
apparatus 2100

2120

2110

2111

Board

2121          2122

Antenna

2112

Memory ⟷ Processor

Radio frequency unit

FIG. 21

Antenna

2210

Radio frequency circuit

2220

Memory ⟷ Processor

Input/Output apparatus

FIG. 22

<table>
<tr><td colspan="2" align="center">**INTERNATIONAL SEARCH REPORT**</td><td>International application No.<br>**PCT/CN2022/124142**</td></tr>
</table>

**A. CLASSIFICATION OF SUBJECT MATTER**

H04W 72/04(2009.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

WPABSC; CNTXT; ENTXT; WPABS; 3GPP; IETF; ENTXTC: 基序列, 第一, 第二, 跳频, 物理上行控制信道, 资源块, base w sequence, first, second, frequency hopping, PUCCH, PRB

**C. DOCUMENTS CONSIDERED TO BE RELEVANT**

| Category* | Citation of document, with indication, where appropriate, of the relevant passages | Relevant to claim No. |
|---|---|---|
| A | CN 108882376 A (HUAWEI TECHNOLOGIES CO., LTD.) 23 November 2018 (2018-11-23) description, paragraphs 0105-0135 | 1-56 |
| A | NTT DOCOMO, INC. "PUCCH structure in long-duration" *3GPP TSG RAN WG1 Meeting #92, R1-1802484*, 17 February 2018 (2018-02-17), section 2 | 1-56 |
| A | CN 111869290 A (QUALCOMM INC.) 30 October 2020 (2020-10-30) entire document | 1-56 |
| A | WO 2019047555 A1 (HUAWEI TECHNOLOGIES CO., LTD.) 14 March 2019 (2019-03-14) entire document | 1-56 |

☐ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 December 2022** | **04 January 2023** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| Patent document cited in search report | | | Publication date (day/month/year) | Patent family member(s) | | | Publication date (day/month/year) |
|---|---|---|---|---|---|---|---|
| CN | 108882376 | A | 23 November 2018 | CN | 108924932 | A | 30 November 2018 |
| | | | | WO | 2019091135 | A1 | 16 May 2019 |
| | | | | CN | 109041229 | A | 18 December 2018 |
| CN | 111869290 | A | 30 October 2020 | EP | 3750362 | A1 | 16 December 2020 |
| | | | | WO | 2019154400 | A1 | 15 August 2019 |
| | | | | US | 2021152305 | A1 | 20 May 2021 |
| | | | | WO | 2019153233 | A1 | 15 August 2019 |
| WO | 2019047555 | A1 | 14 March 2019 | JP | 2020534730 | A | 26 November 2020 |
| | | | | KR | 20200035150 | A | 01 April 2020 |
| | | | | EP | 3657846 | A1 | 27 May 2020 |
| | | | | CN | 109474955 | A | 15 March 2019 |
| | | | | US | 2020288487 | A1 | 10 September 2020 |
| | | | | KR | 20210100226 | A | 13 August 2021 |

Form PCT/ISA/210 (patent family annex) (January 2015)

**REFERENCES CITED IN THE DESCRIPTION**

**Patent documents cited in the description**

- CN 202111236094